# EUROPÄISCHE PATENTSCHRIFT

(11) **EP 2 749 860 B1**
(45) Veröffentlichungstag und Bekanntmachung des Hinweises auf die Patenterteilung: **15.04.2015**
(21) Anmeldenummer: 13405145.7
(22) Anmeldetag: 31.12.2013
(51) Int. Cl.: G01M 3/00, A62C 35/60, E03B 7/07, E03B 9/04, F16K 37/00, F16K 27/00, G01M 3/24, E03B 9/02

(54) **Überwachungseinrichtung für ein Wasserleitungsnetz**
Monitoring device for a water supply network
Dispositif de surveillance pour un réseau d'alimentation en eau

(30) Priorität: 31.12.2012 CH 29992012
(43) Veröffentlichungstag der Anmeldung: 02.07.2014
(73) Patentinhaber: Hinni AG, 4105 Biel-Benken (CH)
(72) Erfinder: Jermann, Dieter, CH-4242 Laufen (CH); Riesen, Urs, CH-4622 Egerkingen (CH)
(74) Vertreter: Ullrich, Gerhard

(56) Entgegenhaltungen:
- EP-A1- 1 052 492
- EP-A1- 1 077 371
- WO-A1-2007/012631
- CH-A5- 691 932
- US-A1- 2012 004 866
- Hinni AG: "Kontrollsystem für Trinkwassernetze", , Januar 2010 (2010-01), XP002714980, Gefunden im Internet: URL:http://www.hinni.ch/images/stories/pre sseschau_lorno/simrit_insight_01-2010.pdf [gefunden am 2013-10-17]

## Beschreibung

### Anwendungsgebiet der Erfindung

Die Erfindung betrifft eine Überwachungseinrichtung für ein Wasserleitungsnetz, die an einem Hydranten installiert ist. Die Überwachungseinrichtung besitzt eine Signaleinheit mit zumindest einer Detektoreinheit zur Zustandserfassung im Wasserleitungsnetz und/oder am Hydranten. Ferner umfasst die Einrichtung eine zum Betrieb der Signaleinheit dienende Batterie und eine Sendeantenne zur Übermittlung der von der zumindest einen Detektoreinheit erfassten Signale.

### Stand der Technik

Die WO 2007/012 631 A1 betrifft eine Überwachungsanordnung, mittels derer Manipulationen an Hydranten erfasst werden. Der Hydrant hat eine verschliessbare Schutzabdeckung, unter der die Bedienungselemente angeordnet sind. Die Überwachungsanordnung besteht aus einem Alarmelement, einer Stromquelle, einem Signalgeber, einem Schalter sowie einem Auslöser. Das Alarmelement ist derart positioniert, dass es beim Öffnen der Schutzabdeckung vom Auslöser getrennt wird. Der Schalter ermittelt die Trennung und stellt eine elektrische Verbindung zwischen der Stromquelle und dem Alarmelement her, Das vom Signalgeber erzeugte Signal zeigt das Öffnen der Schutzabdeckung am Hydranten an.

Ferner sind Vorrichtungen zur Ortung einer Leckstelle am Rohrsystem eines Trinkwasserleitungsnetzes bekannt. Mittels Messung von Geräuschen, die beim Ausströmen aus einem Leck entstehen, lässt sich die Leckstelle feststellen und orten. Hierbei werden vorrangig die Messung von Körperschall mit einem Accelerometer am Rohrleitungssystem sowie die Geräuschemessung im Wasser mit einem Hydrophon praktiziert.

Die in der EP 1 052 492 A1 offenbarte Leckdetektoranordnung dient zur Erkennung von Lecks in einem Rohrleitungssystem für Fluide. Die Anordnung umfasst einen Vibrationssensor mit einer Membran. Der Sensor ist so in eine Vorrichtung - z.B. einen Hydrant - eingebaut, dass die Membran des Sensors in direktem und permanentem Kontakt zum im Rohrleitungssystem transportierten Fluid steht. Somit werden im Fluid auftretende Schallwellen detektiert. Der Sensor hat einen Energiespeicher und ist durch eine optische oder elektronische Übertragungseinrichtung mit einem Datenlogger verbunden.

Die Anordnung gemäss der CH 691 932 A5 ist zur Lecküberwachung in einem Leitungssystem für Flüssigkeiten oder Gase bestimmt und besitzt einen Hohlzylinder, in welchem sich eine Messeinrichtung befindet. Die Messeinrichtung umfasst einen über ein Kabel mit dem Datenlogger verbundenen Schallsensor, eine Energieversorgung und eine Kontaktfläche. Die Kontaktfläche hat Verbindung zur Spindel eines Hydranten und dient der Übertragung von im Leitungsnetz durch ein Leck ausgelösten Körperschallwellen auf die Messeinrichtung. Die Schallwellen werden durch die Flüssigkeit im Leitungsrohr und dessen Wandung zum Hydranten geleitet, wo sie über die Spindel und die Kontaktfläche auf den Sensor gelangen. Hier erfolgt die Umwandlung der Körperschallwellen in elektronische Signale, welche über das Kabel in den Datenlogger übertragen werden. Der Datenlogger zeichnet zu bestimmten Zeiten eine oder mehrere Messungen auf und speichert diese. Das Ablesen der Messdaten kann z.B. direkt an einem Display am Schallsensor erfolgen.

Im Prospekt "Kontrollsystem Lorno", Ausgabe PRODOC.D5/2006V01, der Hinni AG, CH-4105 Biel-Benken / Schweiz, wird eine Messvorrichtung mit einem Hydrophon offeriert, welches am Hauptventil eines Hydranten - dem Rohrleitungsnetz zugewandt - sitzt. Vom Hydrophon erstreckt sich eine Signalleitung durch die Ventilstange zu einer unterhalb des Spindellagers angebrachten Elektronikeinheit, die von einer integrierten Batterie betrieben wird. Das Hydrophon nimmt im Wasser auftretende Schallwellen direkt auf, ausserdem werden Wasserbezüge und Füllstand von einer Sensorik der Elektronikeinheit erfasst. Die Signale werden von einer zur Elektronikeinheit gehörenden, im Hydranten sitzenden internen Sendeantenne auf eine Aussenantenne übertragen und von hier - eventuell über Zwischenstation an weitere derart ausgestattete Hydranten - auf eine Überwachungszentrale geleitet.

### Aufgabe der Erfindung

Der Erfindung liegt die Aufgabe zugrunde, eine verbesserte Überwachungseinrichtung für ein Wasserleitungsnetz zu schaffen, welche den apparativen Aufwand minimiert und den Service vereinfacht. Die Einrichtung soll sich vorteilhaft am Hydranten positionieren lassen. Ausserdem muss die Einrichtung Raum für weitere Bauteile bieten, mittels derer zusätzliche Funktionen am Hydranten realisierbar sind, ohne dabei die angestammten Funktionen des Hydranten zu beeinträchtigen.

### Übersicht über die Erfindung

Bei der Überwachungseinrichtung für ein Wasserleitungsnetz, die an einem Hydranten installiert ist, weist der Hydrant auf:
a) ein zum Anschluss an das Wasserleitungsnetz bestimmtes Steigrohr, auf dem sich eine optionale Steigrohrverlängerung montieren lässt;
b) ein Hauptventil zum Zusammenwirken mit einem Ventilsitz;
c) eine mit dem Hauptventil verbundene Ventilstange, an der sich eine optionale Ventilstangenverlängerung montieren lässt;
d) eine mit der Ventilstange bzw. der Ventilstangenverlängerung verbundene Spindelmutter, in welche eine Spindel eingreift; und
e) ein Spindellager, an dem sich die Spindel axial abstützt und das im Steigrohr bzw. in der Steigrohrverlängerung arretiert ist.

Die zur Überwachungseinrichtung gehörende Signaleinheit weist auf:
f) zumindest eine Detektoreinheit zur Zustandserfassung im Wasserleitungsnetz und/oder am Hydranten;
g) eine zur Stromversorgung der Signaleinheit dienende Batterie; und
h) eine Sendeantenne zur Übermittlung der von der zumindest einen Detektoreinheit erfassten Signale.

Dabei umfasst die Signaleinheit ein auf dem Steigrohr bzw. auf der Steigrohrverlängerung montiertes Basisteil, welches einen Axialdurchgang und ein von aussen zugängliches Aufnahmefach zur Unterbringung der Batterie hat. Nachstehend sind besonders vorteilhafte Details zur erfindungsgemässen Überwachungseinrichtung genannt. Das Basisteil dient zur Durchleitung der von der zumindest einen Detektoreinheit erfassten Signale an die Sendeantenne. Zur Bildung eines Hydranten in Gestalt eines Überflurhydranten ist auf dem Basisteil ein Aufsatzrohr montierbar. Zur alternativen Bildung eines Hydranten in Gestalt eines Unterflurhydranten ist auf dem Basisteil ein Deckel montierbar oder das Basisteil besitzt einen fest zugehörigen Deckel. In den Axialdurchgang des Basisteils ragt ein mit der Spindel verbundener Spindelaufsatz oder ein auf dem Spindelaufsatz montiertes Verlängerungsstück hinein. Der Axialdurchgang dient dem Wasserdurchlass hin zum Anschluss eines Aufsatzrohrs oder hin zum Anschluss an einem Deckel oder die Wasserführung ist vorbei am Basisteil hin zum Anschluss ausgebildet.

Eine erste Detektoreinheit ist am Basisteil angeordnet. Die Sendeantenne ist aussen am Basisteil oder entfernt vom Hydranten installiert. Das Basisteil hat einen nach aussen weisenden Schaft mit einer nach aussen mündenden Öffnung. An den Schaft setzt ein Gehäuse an, welches zur Aufnahme der Sendeantenne nutzbar ist und zur Bildung des Aufnahmefachs mit der darin eingesetzten Batterie dient. Alternativ hat das Basisteil einen nach aussen weisenden Schaft und ein sich daran einteilig anschliessendes Gehäuse. Schaft und Gehäuse haben einen inneren Hohlraum, der anteilig das Aufnahmefach für die darin einsetzbare Batterie darstellt. Das Gehäuse ist wiederum zur Aufnahme der Sendeantenne nutzbar.

Das Basisteil hat einen sich in dessen Axialdurchgang erstreckenden Sockel, an dem die erste Detektoreinheit installiert ist. Die erste Detektoreinheit hat einen beweglichen Schwimmer, welcher zur Signalisation von im Steigrohr bzw. auch in der optional vorhandenen Steigrohrverlängerung befindlichen Wassers dient.

In weiterer Ausgestaltung kann man am Basisteil eine Zusatzsensorik vorsehen, nämlich zur Schallmessung zwecks Leckerkennung und/oder zur Erfassung des mengenmässigen Wasserbezugs über den Hydranten und/oder zur Erfassung von Wasserkenngrössen, wie Druck, pH-Wert, Härte, Trübung und Temperatur. Vor dem Hauptventil, dem Wasserleitungsnetz zugewandt, ist eine zweite Detektoreinheit zur Erkennung eines Lecks im Wasserleitungsnetz mittels Schallmessung angeordnet. Diese zweite Detektoreinheit hat die Gestalt eines Hydrophons. Zwischen der zweiten Detektoreinheit und der Sendeantenne besteht eine elektrische Verbindung. Die elektrische Verbindung umfasst:
a) ein an die zweite Detektoreinheit angeschlossenes erstes Kabel, das im Hydranten aufwärts geführt ist;
b) ein sich vom ersten Kabel fortsetzendes zweites Kabel, welches an eine Elektronikeinheit führt; und
c) einen Anschluss zwischen der Elektronikeinheit und der Sendeantenne.

Ein oberes Ende des ersten Kabels ist mit einem ersten Kupplungsteil versehen. Ein Ende des zweiten Kabels ist mit einem zweiten Kupplungsteil versehen, das am Basisteil angeordnet ist. Die beiden Kupplungsteile sind zur Verbindung miteinander bestimmt. Das zweite Kabel erstreckt sich aus dem Basisteil durch dessen Schaft in das Gehäuse, in dem die Elektronikeinheit untergebracht ist. Ein anderes Ende des zweiten Kabels ist mit einem Kontaktelement versehen, das an der Elektronikeinheit angeschlossen ist.

Das Basisteil hat ein Raster von Schraubenlöchern, die zur Verschraubung einerseits mit dem Steigrohr bzw. der Steigrohrverlängerung bestimmt sind. Andererseits dienen die Schraubenlöcher zur Verschraubung mit einem Aufsatzrohr zur Bildung eines Überflurhydranten bzw. mit einem Deckel zur Bildung eines Unterflurhydranten. Das Raster von Schraubenlöchern erlaubt die Befestigung des Basisteils auf dem Steigrohr bzw. der Steigrohrverlängerung in wählbarer Drehstellung. Das Raster von Schraubenlöchern erlaubt auch die Befestigung des Aufsatzrohrs bzw. des Deckels auf dem Basisteil in wählbarer Drehstellung.

Alternativ ist beim Aufbau eines Überflurhydranten das Basisteil zwischen dem oberen Flansch des Steigrohrs bzw. auf dem oberen Flansch der Steigrohrverlängerung und dem unteren Flansch des Aufsatzrohrs eingespannt. Dabei erstreckt sich eine Verschraubung zwischen dem oberen Flansch des Steigrohrs bzw. dem oberen Flansch der Steigrohrverlängerung und dem unteren Flansch am Aufsatzrohr, ohne das Basisteil zu durchdringen. Hingegen beim Aufbau eines Unterflurhydranten ist das Basisteil zwischen dem oberen Flansch des Steigrohrs und dem Deckel nach aussen dicht verspannt, wobei die Verspannung mittels Schrauben und Muttern erfolgt, die sich am oberen Flansch bzw. am Deckel abstützen, ohne das Basisteil zu durchdringen. An einem Unterflurhydranten mit einer Steigrohrverlängerung sitzt das Basisteil auf deren oberen Flansch auf und die Verschraubung stützt sich daran ab.

Das Aufnahmefach zur Aufnahme der Batterie für die Energieversorgung der Überwachungseinrichtung wird bei einfacher Ausführung direkt vom Hohlraum des Gehäuses gebildet. Oder das Aufnahmefach liegt in einem als separates Bauteil beschaffenem Batteriehalter, der zum Einsetzen in den Hohlraum des Gehäuses bestimmt ist. Ein aus dem Hohlraum mündender Zugang für das Einsetzen der Batterie bzw. des Batteriehalters mit der darin positionierten Batterie ist von einem lösbaren Deckel verschlossen. Am Gehäuse kann eine Anschlussbuchse zum Andocken einer Verbindung zur Antenne vorgesehen sein.

Der Batteriehalter mit seinem Aufnahmefach weist zwei sich diametral und in Axialrichtung des Gehäuses armartig erstreckende Stege auf, an deren Enden eine Fixierkontur vorgesehen ist. Das Gehäuse ist axial beidseits mit je einem Deckel verschliessbar, in dem ein Fixierelement steckt, welches in die jeweils zugewandte Fixierkontur am Batteriehalter eingreift.

Die Sendeantenne innerhalb eines Verbundes von Hydranten, die jeweils mit der Überwachungseinrichtung ausgestattet sind, ist auch zum Empfang von Signalen einer benachbart installierten Überwachungseinrichtung und Weiterleitung dieser Signale an eine nächste Überwachungseinrichtung oder eine Datenzentrale nutzbar.

### Kurzbeschreibung der beigefügten Zeichnungen

Es zeigen:
- Figur 1A: - einen Hydranten in Gestalt eines Überflurhydranten mit der erfindungsgemässen Überwachungseinrichtung und der Signaleinheit in *erster Variante,* in Perspektivansicht;
- Figur 1B: - einen Hydranten in Gestalt eines Unterflurhydranten mit erfindungsgemässer Überwachungseinrichtung und der Signaleinheit in *erster Variante,* Schachtrohr und abgehobener Abdeckung, in Perspektivansicht;
- Figur 1C: - den Aufbau mit Steigrohr, Steigrohrverlängerung, Signaleinheit und sichtbarem Spindelaufsatz aus Figur 1A, in Perspektivansicht;
- Figur 2: - die Signaleinheit aus Figur 1A, in perspektivischer Explosivansicht von oben;
- Figur 3A: - die Signaleinheit aus Figur 1A, in perspektivischer Draufsicht;
- Figur 3B: - die Signaleinheit gemäss Figur 3A, in perspektivischer Unteransicht;
- Figur 3C: - die Signaleinheit gemäss Figur 3B mit im Basisteil eingesetzten Gewindehülsen und angeschlossener Zusatzsensorik, in perspektivischer Draufsicht;
- Figur 4A: - den Aufbau gemäss Figur 1C mit aufgesetztem Schutzrohr, im vertikalen Teilschnitt;
- Figur 4B: - den Aufbau gemäss Figur 4A mit von der Steigrohrverlängerung abgehobener Signaleinheit, im vertikalen Teilschnitt;
- Figur 4C: - das vergrösserte Detail X1 aus Figur 4A;
- Figur 4D: - das vergrösserte Detail X2 aus Figur 4B;
- Figur 4E: - das vergrösserte Detail X3 aus Figur 4A;

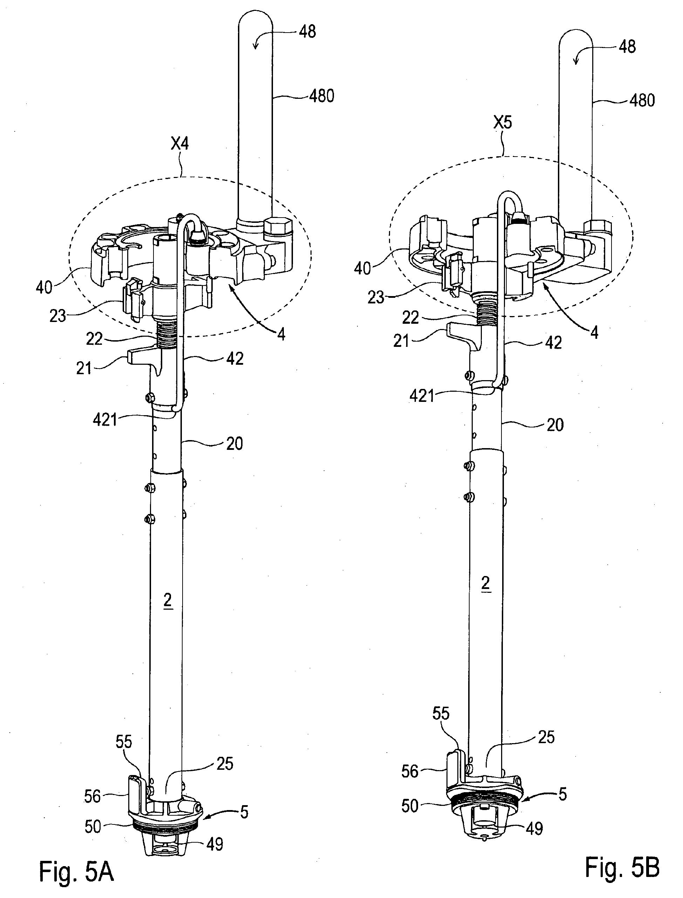

- Figur 5A: - den Aufbau aus Hauptventil, Ventilstange, Ventilstangenverlängerung, Spindelmutter, Spindel, Spindellager und Signaleinheit aus Figur 4A, im vertikalen Teilschnitt;
- Figur 5B: - den Aufbau gemäss Figur 5A, in gewechselter Ansicht;

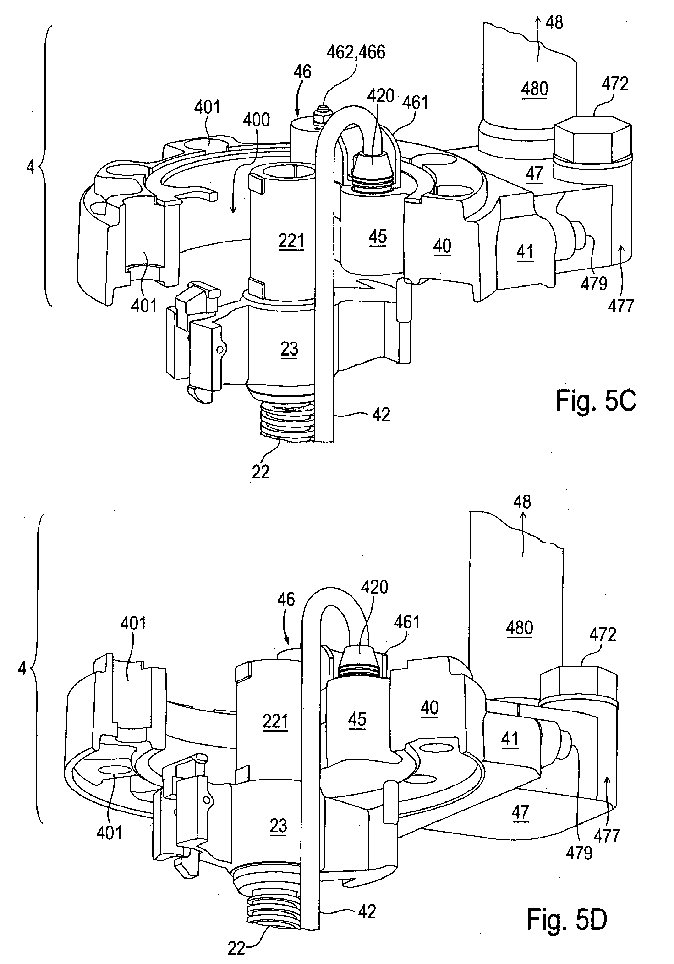

- Figur 5C: - das vergrösserte Detail X4 aus Figur 5A;
- Figur 5D: - das vergrösserte Detail X5 aus Figur 5B;

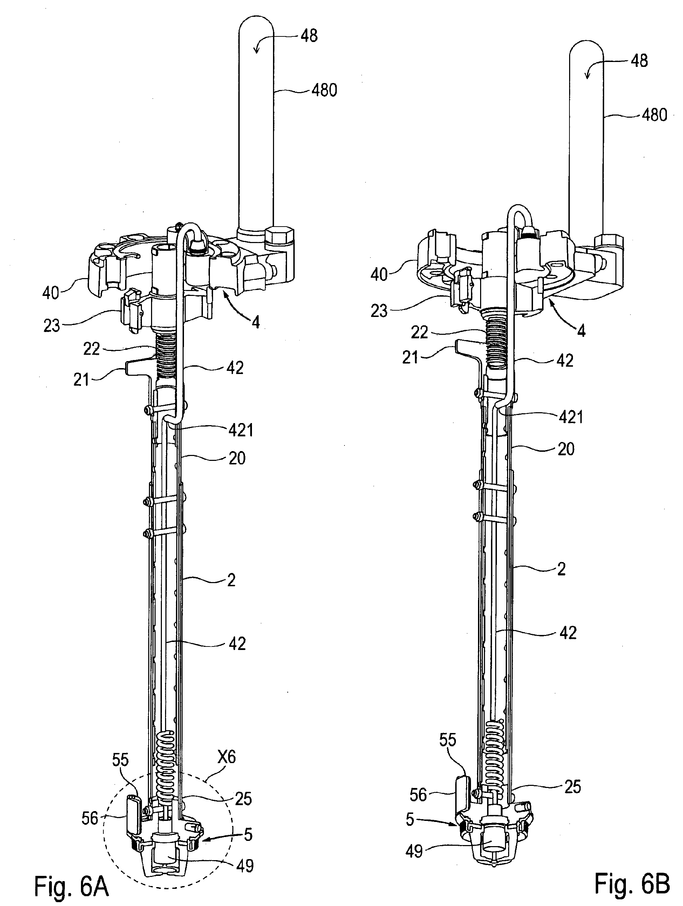

- Figur 6A: - den Aufbau gemäss Figur 5A, im frontalen Vertikalschnitt;
- Figur 6B: - den Aufbau gemäss Figur 6A, im perspektivischen Vertikalschnitt;

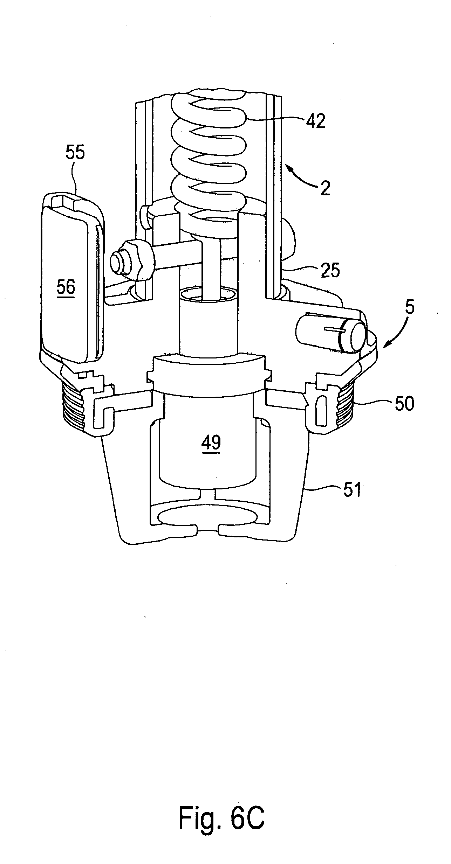

- Figur 6C: - das vergrösserte Detail X6 aus Figur 6A;

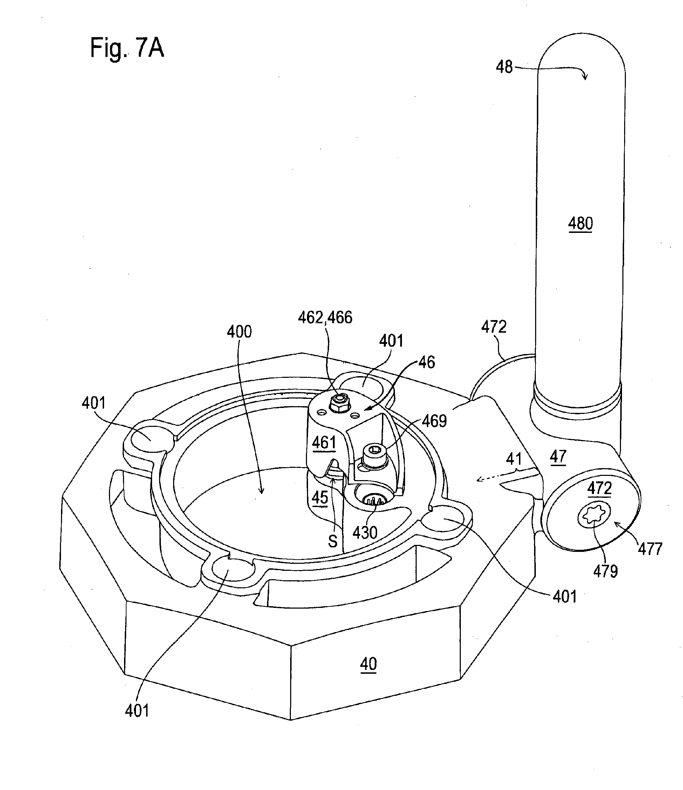

- Figur 7A: - die Signaleinheit *erster Variante* mit Modifikationen, in perspektivischer Draufsicht;

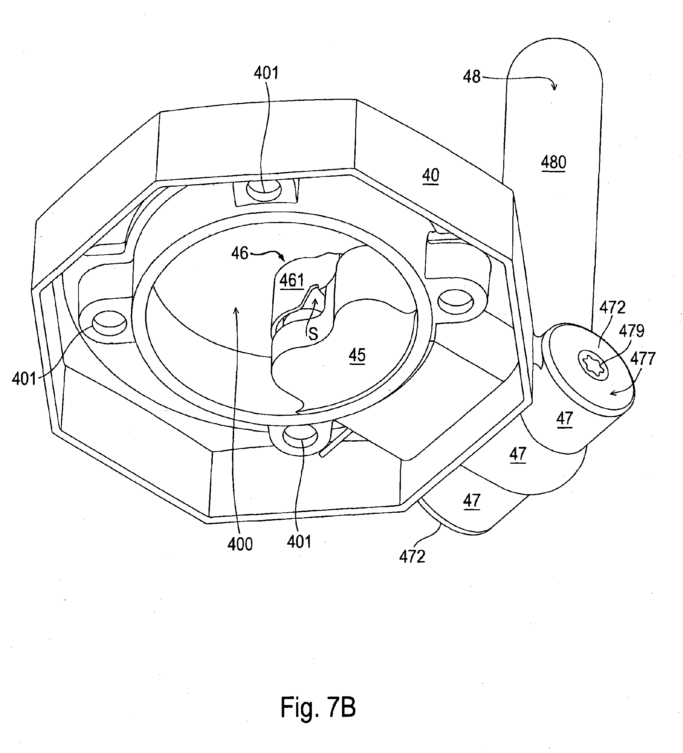

- Figur 7B: - die Signaleinheit gemäss Figur 7A, in perspektivischer Unteransicht;

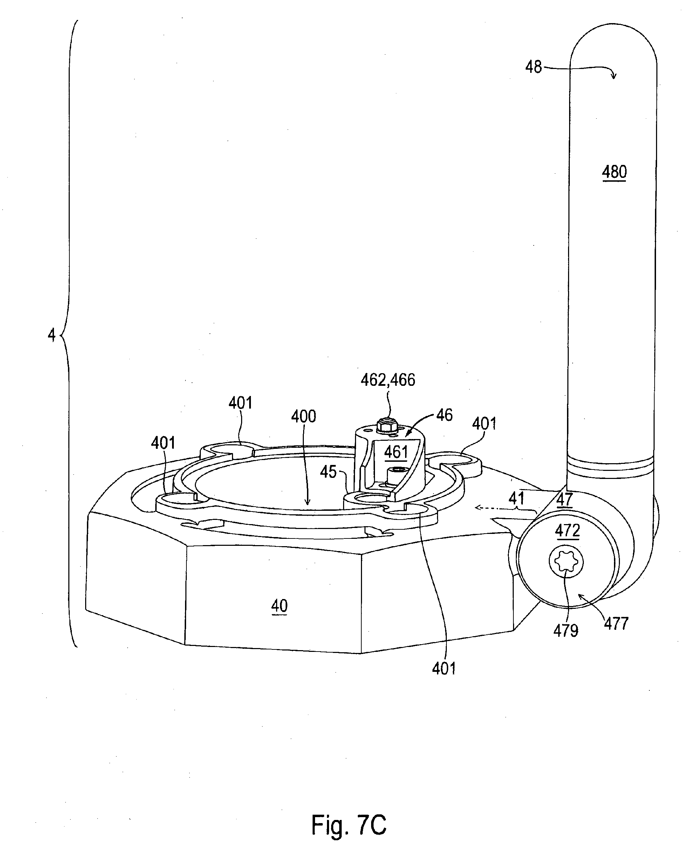

- Figur 7C: - die Signaleinheit gemäss Figur 7A, in gewechselter perspektivischer Draufsicht;

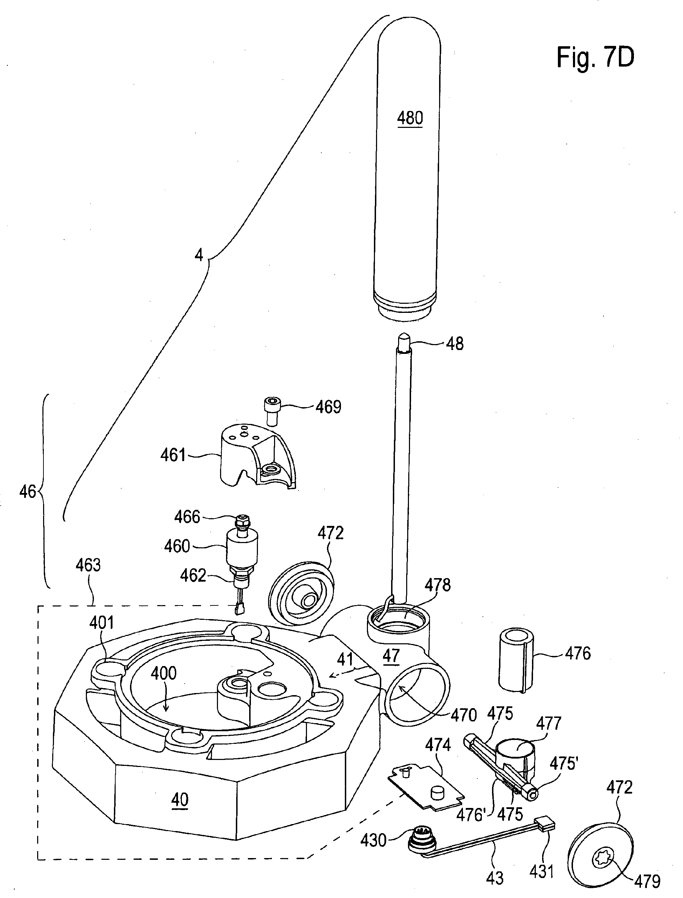

- Figur 7D: - die Signaleinheit gemäss Figur 7A, in perspektivischer Explosivansicht;

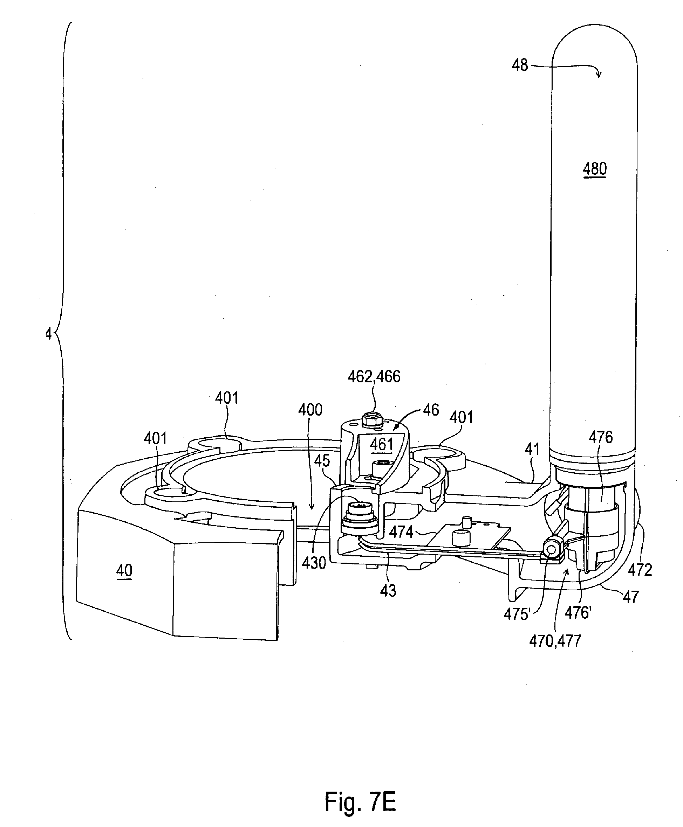

- Figur 7E: - die Signaleinheit gemäss Figur 7C, im Teilschnitt;

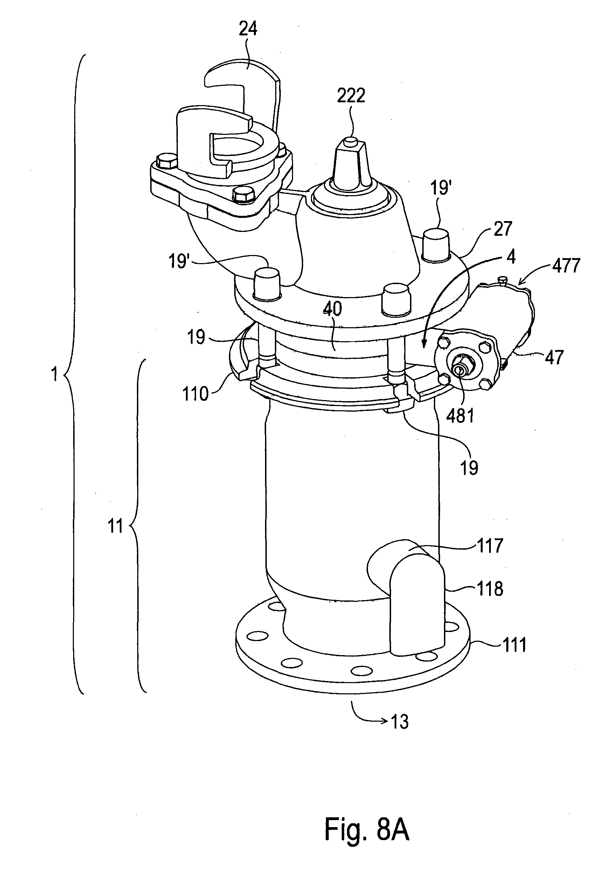

- Figur 8A: - einen Hydranten in Gestalt eines Unterflurhydranten mit erfindungsgemässer Überwachungseinrichtung und der Signaleinheit in *zweiter Variante,* in Perspektivansicht;

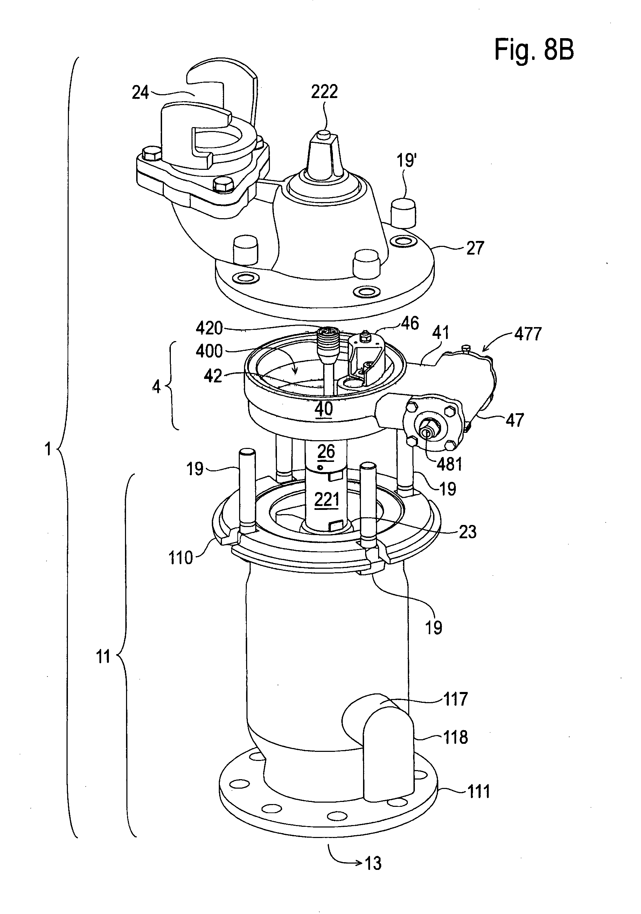

- Figur 8B: - den Aufbau gemäss Figur 8A, in perspektivischer Explosivansicht von oben;

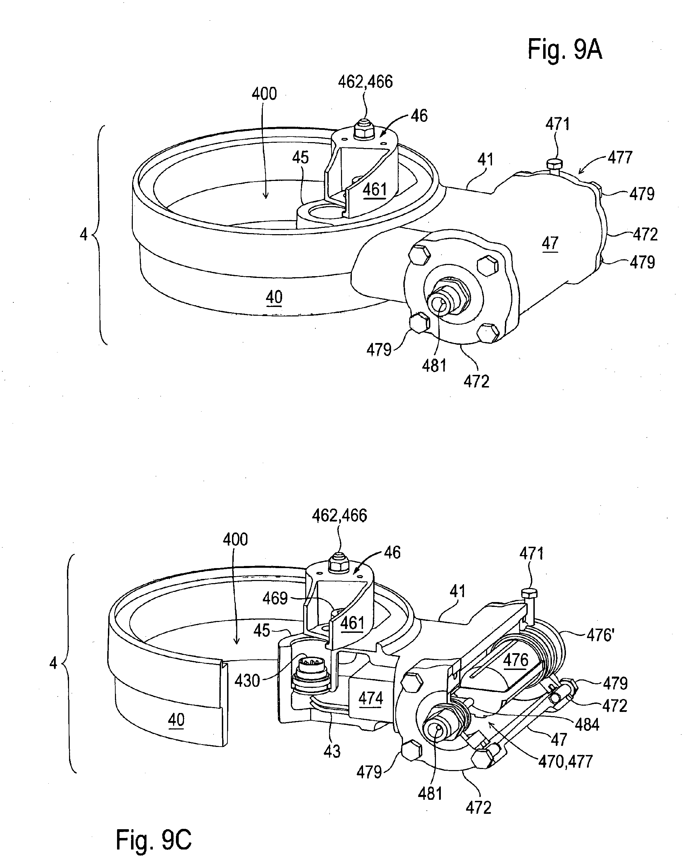

- Figur 9A: - die Signaleinheit aus Figur 8A, in Perspektivansicht;

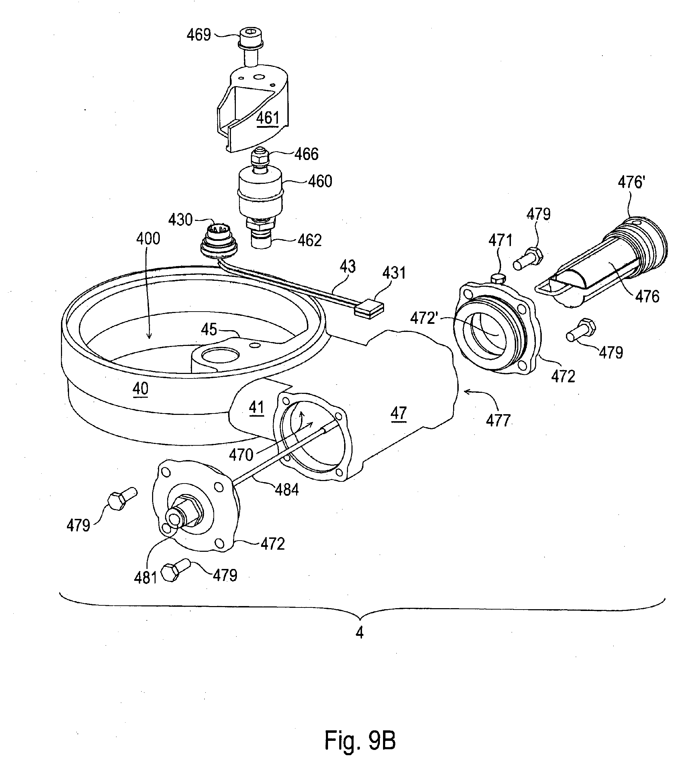

- Figur 9B: - die Signaleinheit gemäss Figur 9A, in perspektivischer Explosivansicht; und
- Figur 9C: - die Signaleinheit gemäss Figur 9A, im Teilschnitt.

### Ausführungsbeispiel

Mit Bezug auf die beiliegenden Zeichnungen erfolgt nachstehend die detaillierte Beschreibung eines Ausführungsbeispiels der erfindungsgemässen Überwachungseinrichtung in zwei Varianten für ein Wasserleitungsnetz in Verbindung mit einem Überflur- sowie alternativ mit einem Unterflurhydranten.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figur 1A

In einer ersten Ausführungsvariante wird die Überwachungseinrichtung mit der Signaleinheit **4** in Kombination mit einem Überflurhydranten **1** behandelt, der im wesentlichen aus einem Steigrohr **11,** der optionalen Steigrohrverlängerung **12,** dem Aufsatzrohr **10** und den hier nicht sichtbaren Einbauten besteht. Zumeist ist an das Steigrohr **11** ein hier nicht gezeigtes Einlaufrohr - oftmals bogenförmig gestaltet - montiert, welches andererseits an das Wasserleitungsnetz **13** angeschlossen ist. Das Einlaufrohr hat einen oberen Flansch, der mit dem unteren Flansch **111** des Steigrohrs **11** mittels Verschraubungen verbunden ist. Nahe dem unteren Flansch **111** geht vom Steigrohr **11** ein Stutzen **117** ab, an dem ein nach unten weisender Entwässerungsbogen **118** angeordnet ist. Das Steigrohr **11** schliesst mit einem oberen Flansch **110** ab, auf dessen Höhe die Steigrohrverlängerung **12** in das Steigrohr **11** einmündet. Im Bereich der Mündung umläuft die Steigrohrverlängerung **12** ein unterer Flansch **121,** der am oberen Flansch **110** fixiert ist. Angepasst an die sogenannte Grabentiefe ragt die Steigrohrverlängerung **12** in entsprechender Länge aus dem Steigrohr **11** teleskopisch heraus. Die Steigrohrverlängerung **12** hat am oberen Ende den oberen Flansch **120,** auf dem die Signaleinheit **4** mittels Schrauben **19** befestigt ist. Die Signaleinheit 4 *erster Variante* besteht aus einem Basisteil **40,** von dem sich seitlich ein Gehäuse **47** fortsetzt. Vom Gehäuse **47** erstreckt sich aufwärts eine Antenne **48,** die von einem Schutzrohr **480** umgeben ist. Das in das Gelände aufragende Aufsatzrohr **10** ist auf der Signaleinheit **4** verschraubt. Der Übergang zwischen der Signaleinheit **4** und dem Aufsatzrohr **10** wird zumeist von einem Fundamentring **104** ummantelt. Der Zugang zur im Aufsatzrohr **10** sich erstreckenden Spindelverlängerung ist typisch mit einer Abdeckung **101** verschlossen. Der Anschluss **103** zum Ankuppeln eines Schlauchs für die Wasserentnahme ist hinter einer abnehmbaren Verschlusskappe **102** verborgen.

### Figur 1 B

Hier ist die Signaleinheit **4** *erster Variante* an einem Unterflurhydranten **1** dargestellt. Die Installation des Unterflurhydranten **1** im Wasserleitungsnetz **13** ist zum Überflurhydranten **1** im Prinzip identisch und erfolgt wiederum entweder als direkte Verbindung zwischen Steigrohr **11** und Wasserleitungsnetz **13** oder mittels Zwischenfügung eines hier nicht gezeigten Einlaufrohrs, das mit dem oberen Flansch mit dem unteren Flansch **111** des Steigrohrs **11** verschraubt ist. Wiederum vorhanden sind der Stutzen **117** mit dem Entwässerungsbogen **118.** Ebenso ist die Anbindung der Steigrohrverlängerung **12** an das Steigrohr **11** und die Befestigung der Signaleinheit **4** an der Steigrohrverlängerung **12** unverändert und wird daher nicht erneut beschrieben. Auf dem Basisteil **40** der Signaleinheit **4** ist ein Deckel **27** mittels Schrauben **19** montiert. Aus dem Deckel **27** ragt ein Mitnehmer **222** einer hier nicht gezeigten Spindel **22** hervor, bei deren Betätigung das im Unterflurhydranten **1** angeordnete Hauptventil zwischen einer Schliessstellung und einer zur Wasserentnahme bedingten Offenstellung einstellbar ist. Bei Nichtgebrauch ist der Anschluss **24,** an den für die Wasserentnahme zumeist ein Schlauch angekuppelt wird, mit einer abnehmbaren Kappe versehen. Der Kopf des Steigrohrs **11** bzw. der damit verbundenen optionalen Steigrohrverlängerung **12** wird üblicherweise von einem Schachtrohr **3** umgeben, welches im Erdreich einzementiert und mit einer entfernbaren Abdeckung **30** oben verschlossen ist.

### Figur 1C

Bei einem Unterflurhydranten **1** ist das Schutzrohr **480** über der im Schachtrohr **3** bereits geschützten Antenne **48** an sich nicht notwendig und kann daher vom Gehäuse **47** entfernt werden, so dass sich die Antenne **48** frei vom Gehäuse **47** aufwärts erstreckt. Alternativ kann man eine Kabelverlängerung vorsehen, um die Antenne **48** vom Hydranten **1** entfernter zu positionieren. Durch die Signaleinheit **4** ragt der zur - hier nicht gezeigten - Spindel **22** zugehörige Spindelaufsatz **221** hervor, bei deren Betätigung das im Hydranten **1** angeordnete Hauptventil zwischen der Schliessstellung und der zur Wasserentnahme bedingten Offenstellung einstellbar ist. Das aus Steigrohr **11** und Steigrohrverlängerung **12** sich aufwärts erstreckende erste Kabel **42** ist mittels der Kupplungsteile **420,430** mit dem Basisteil **40** der Signaleinheit **4** verbunden.

### Figuren 2 bis 3C

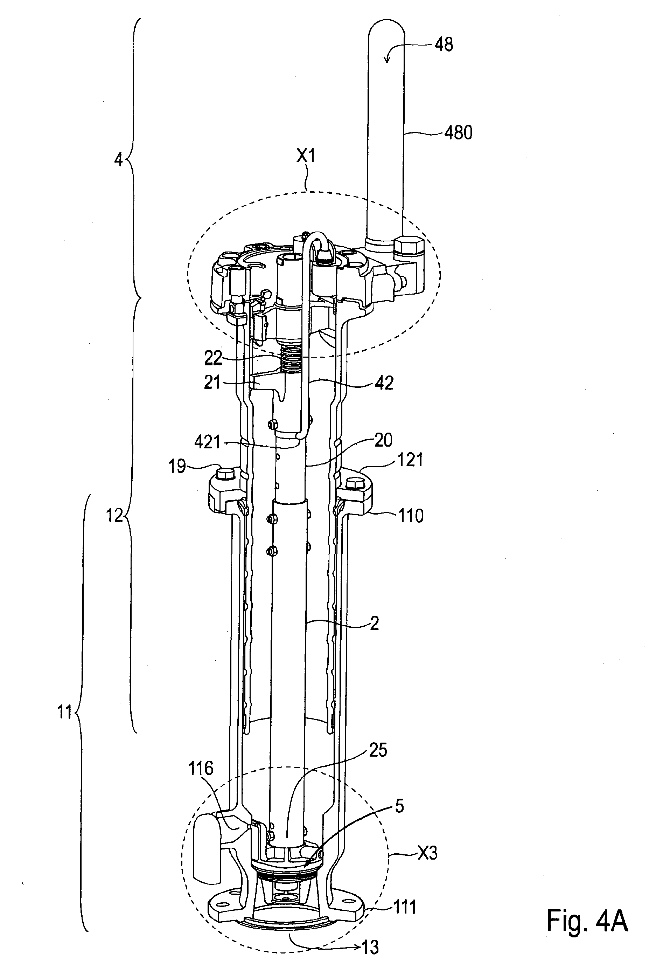

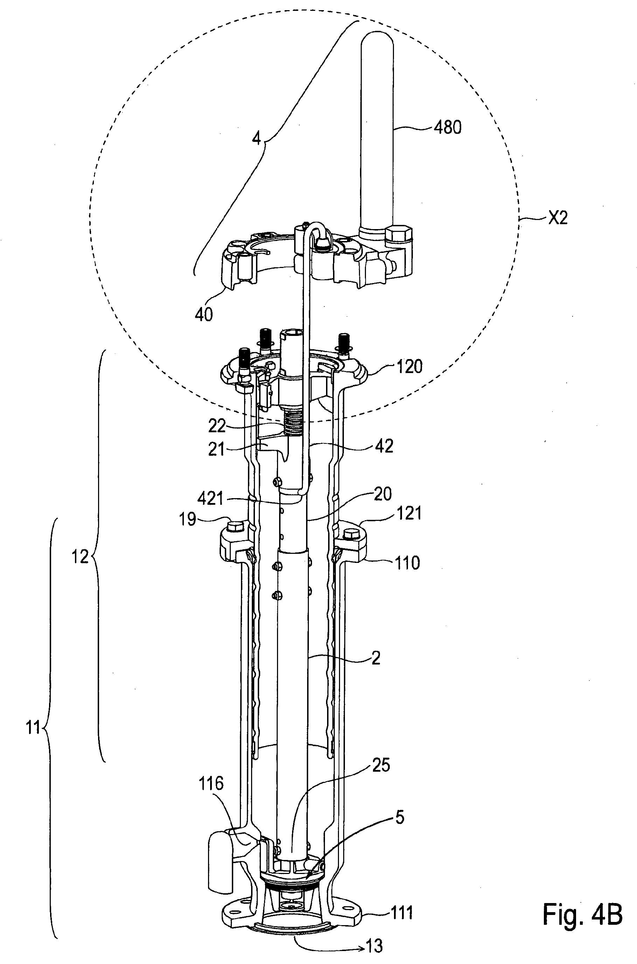

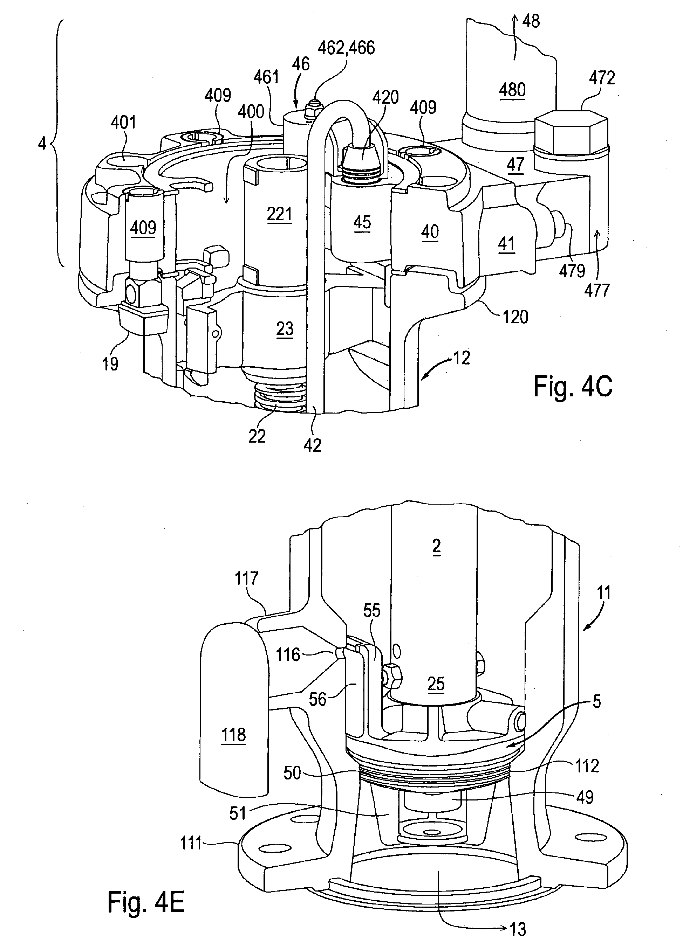

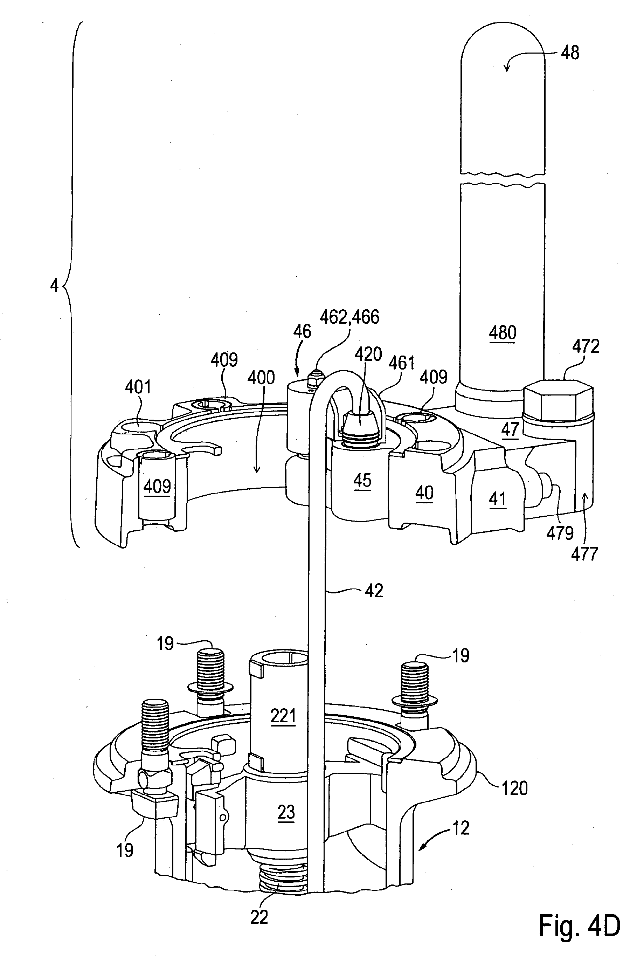

Die Signaleinheit **4** besteht im wesentlichen aus dem kreisringförmigen Basisteil **40,** dem ersten Kabel **42,** dem zweiten Kabel **43,** der ersten Detektoreinheit **46,** dem Gehäuse **47,** der Antenne **48** und der erst in Figur 4E sichtbaren, benachbart zum Hauptventil **5** angeordneten zweiten Detektoreinheit **49,** vorzugsweise in Gestalt eines Hydrophons. Vom Basisteil **40** erstreckt sich radial nach aussen ein Schaft **41,** an dem das rechteckförmige Gehäuse **47** mittels Fixierelementen **479** - z.B. Schrauben - befestigt ist. Das Gehäuse **47** hat einen Hohlraum **470,** in dem die Elektronikeinheit **474,** die Batterie **476** und der Fuss der Antenne **48** aufgenommen sind. Auch können das Basisteil **40** mit dem Schaft **41** und das Gehäuse **47** als ein integrales Bauteil ausgebildet sein. Die Antenne **48** ist durch die Öffnung **478** in das Gehäuse **47** eingesetzt. In der Öffnung **478** lässt sich das Schutzrohr **480** fixieren, z.B. mittels Gewindeeingriff. Benachbart zur Öffnung **478** liegt das Aufnahmefach **477** zur Unterbringung der Batterie **476.** Ein Deckel **472** dient zum Verschliessen des Aufnahmefachs **477.** Die Antenne **48,** die Batterie **476,** der pfostenförmige Schalter **462** und das Kontaktelement **431** am Ende des zweiten Kabels **43** sind elektrisch an der Elektronikeinheit **474** angeschlossen. Vom Schalter **462** führt ein drittes Kabel **463** an die Elektronikeinheit **474.** Alternativ lässt sich die Antenne **48** mittels eines Verbindungsorgans auf oder am Gehäuse **47** fixieren.

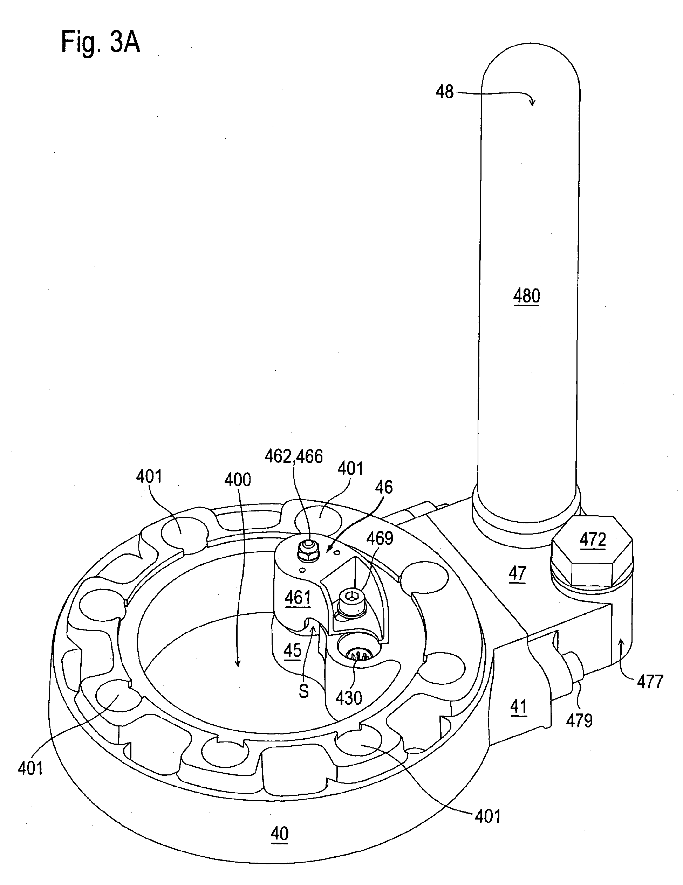

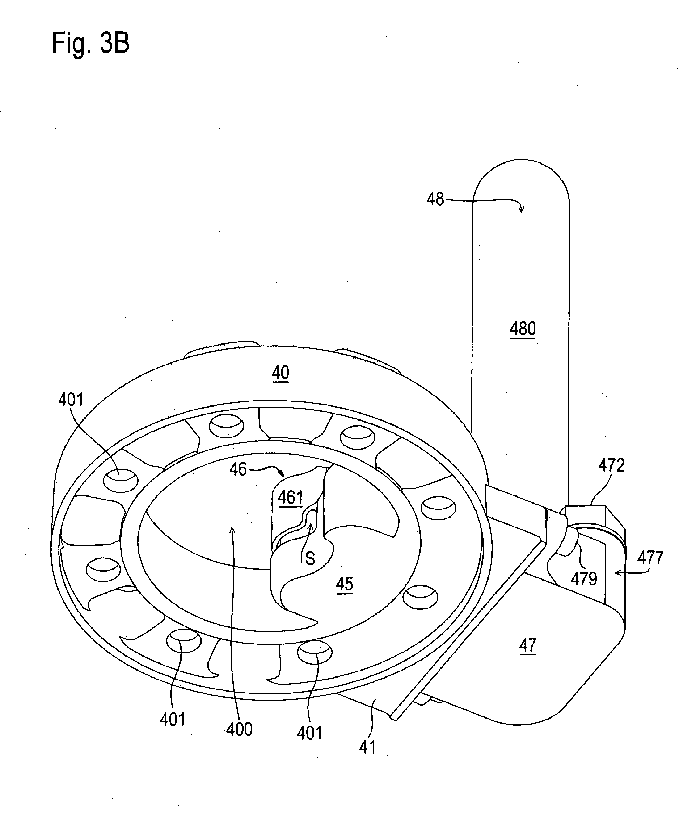

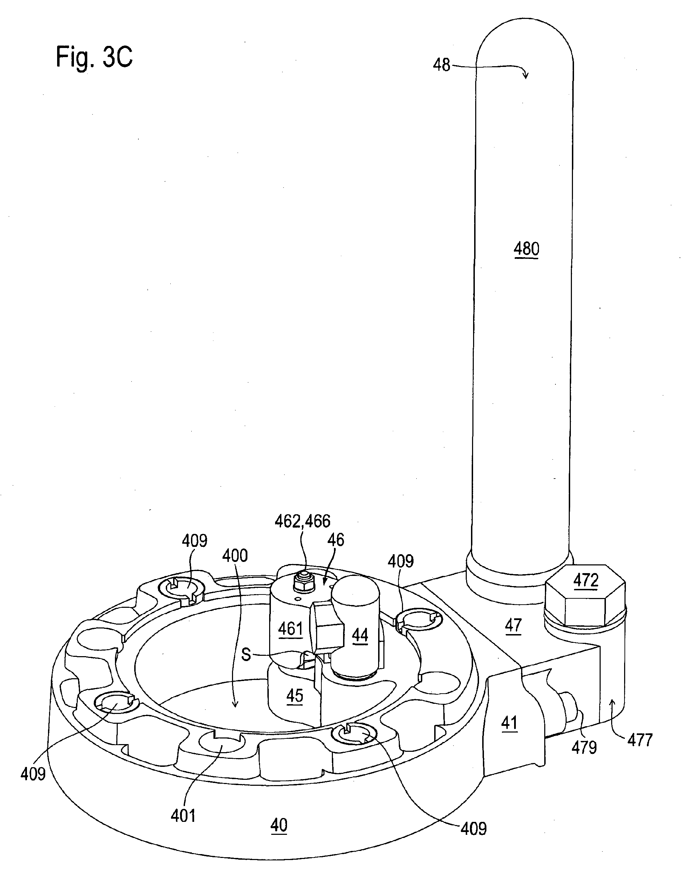

Zwischen Schaft **41** und Gehäuse **47** wird eine Dichtung **473** eingefügt. Vom Basisteil **40** ragt ein Sockel **45,** gegenüberliegend vom Schaft **41,** in den Axialdurchgang **400** des Basisteils **40,** und auf dem Sockel **45** ist die erste Detektoreinheit **46** positioniert. Auf dem im Sockel **45** fixierten Schalter **462** sitzt axial beweglich der Schwimmer **460,** welcher von einer Haube **461** abgeschirmt ist. Die Haube **461** ist mit einer Schraube **469** am Sockel **45** fixiert. Das freie Ende des Schalters **462** ragt durch die Haube **461** und ist mit einer Mutter **466** gesichert. Auf der Oberseite der Haube **461** sind nicht bezeichnete Entlüftungslöcher vorgesehen. Zwischen dem Sockel **45** und der Haube **461** liegt ein Strömungsspalt **S.** Das im Sockel **45** steckende Ende des Schalters **462** könnte anstelle eines dritten Kabels **463** alternativ mit dem im Sockel **45** eingebetteten zweiten Kupplungsteil **430** elektrisch verbunden sein. Vom zweiten Kupplungsteil **430** führt das zweite Kabel **43** durch den Sockel **45** an das Kontaktelement **431,** das an der Elektronikeinheit **474** angeschlossenen ist. Das zweite Kupplungsteil **430** wird mit dem komplementären ersten Kupplungsteil **420** verbunden, welches das obere Ende des ersten Kabels **42** bildet, das sich durch den Axialdurchgang **400** hin zur zweiten Detektoreinheit **49** (s. Figur 4E) erstreckt. Alternativ oder parallel zum ersten Kupplungsteil **420** lässt sich an das zweite Kupplungsteil **430** eine Zusatzsensorik **44** (s. Figur 3C) anschliessen, welche die Funktion hat, den mengenmässigen Wasserbezug über den Hydranten 1 und/oder Wasserkenngrössen - wie Druck, pH-Wert, Härte, Trübung und Temperatur - zu erfassen. Eine Temperaturerfassung ist zur Warnung vor Frostgefahr mit möglicher zerstörender Wirkung am Hydranten **1** sinnvoll, um Frostschutzmassnahmen rechtzeitig vorzunehmen. Im Umfang des Basisteils **40** sind um je 45° zueinander versetzte vertikale Durchgangslöcher **401** vorhanden, in die sich Gewindehülsen **409** zur Positionierung des Basisteils **40** auf dem entsprechenden oberen Flansch **110,120** in wahlweiser Drehstellung einsetzen lassen.

### Figuren 4A bis 5D

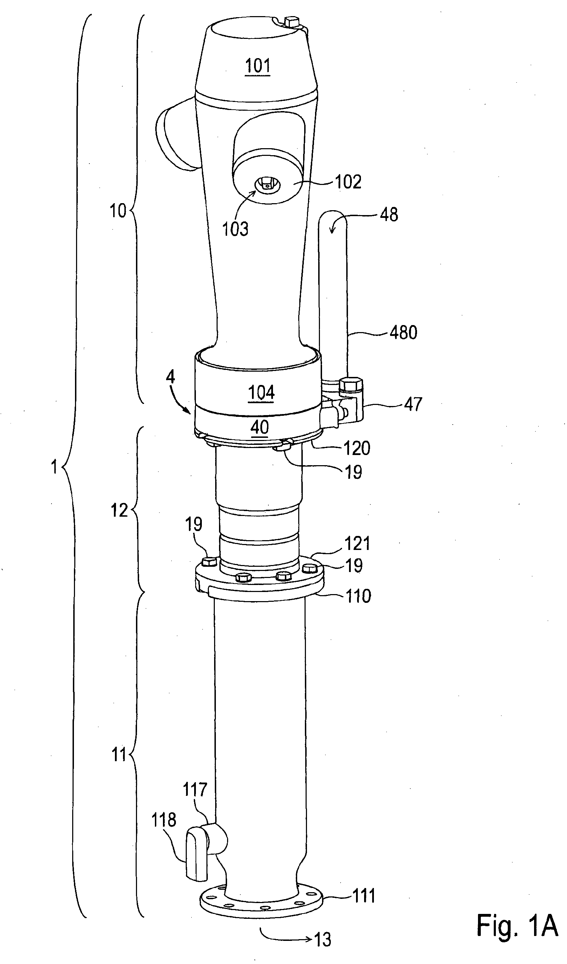

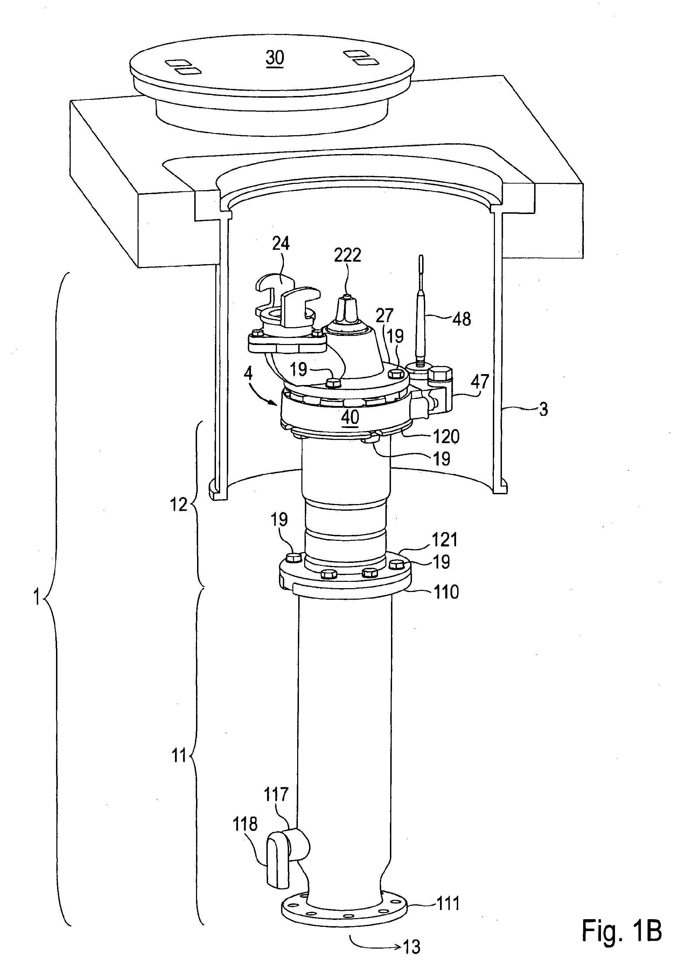

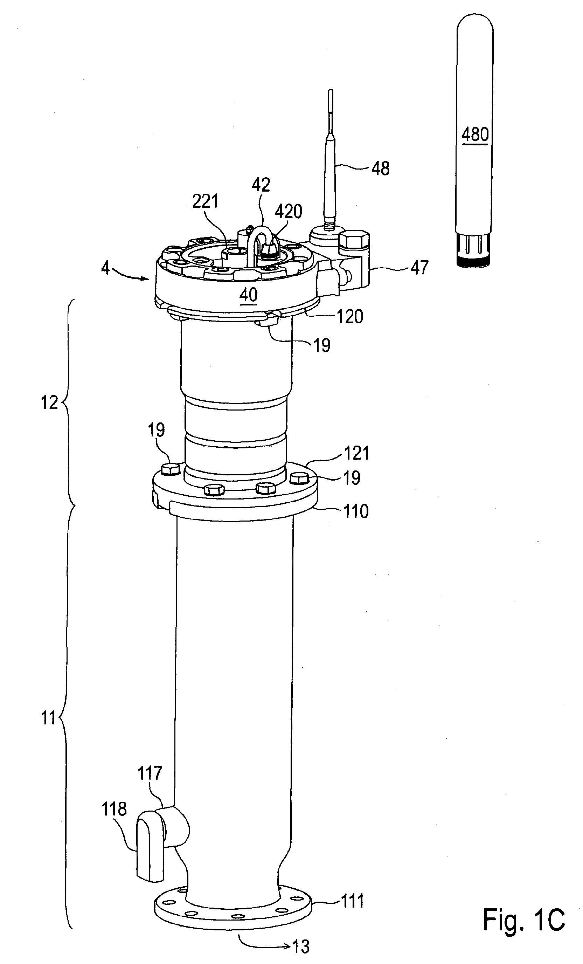

Zur Begrenzung der Anzahl der Figuren und der zugehörigen Beschreibung wird nachfolgend beispielhaft nur mehr auf die Ausführungsvariante mit dem Überflurhydranten **1** gemäss Figur 1A Bezug genommen. Bei diesem Typ des Überflurhydranten **1** liegt unten im Steigrohr **11** der Ventilsitz **112,** und die Entwässerungsöffnung **116** befindet sich im Steigrohr **11** oberhalb des Ventilsitzes **112,** wobei der am Stutzen **117** angedockte Entwässerungsbogen **118** in das Erdreich mündet. Im Steigrohr **11** verläuft axial die Ventilstange **2,** an deren unterem Ende **25** das Hauptventil **5** befestigt ist. Aus der Ventilstange **2** heraus erstreckt sich nach oben die teleskopisch höhenverstellbare Ventilstangenverlängerung **20,** an deren oberen Ende die Spindelmutter **21** montiert ist. Aufbau und Wirkungsweise dieser Bauteile sind allgemein bekannt und bedürfen daher keiner weiteren Beschreibung.

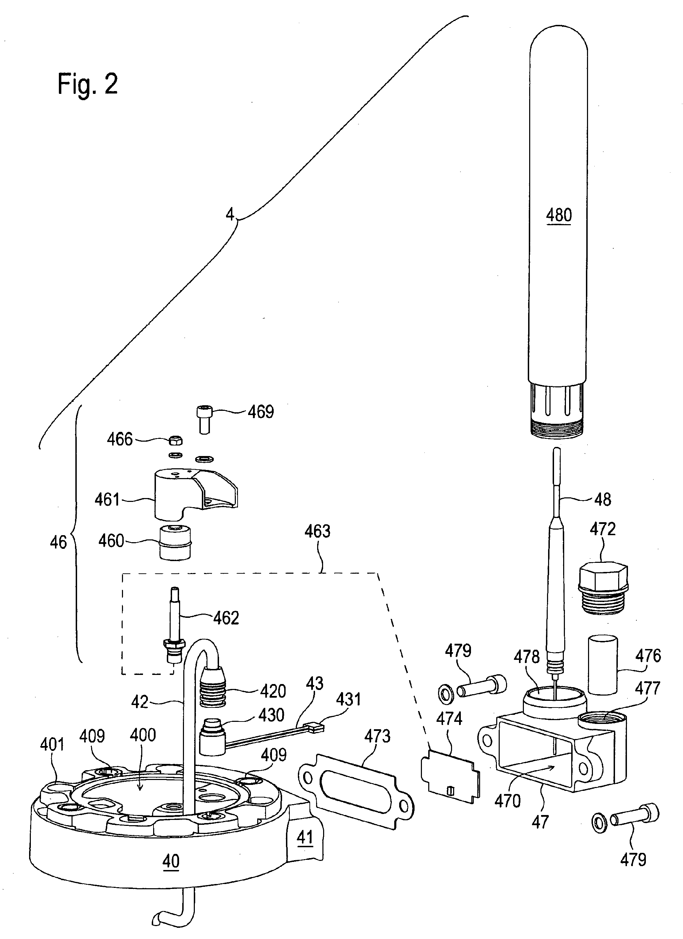

Das Hauptventil **5** befindet sich momentan in Schliessstellung, versperrt also mit der Hauptdichtung **50** den Ventilsitz **112.** Das Hauptventil **5** ist mit einem Kunststoffmantel überzogen, wobei in der Schliessstellung die konisch verjüngende Schrägfläche des Hauptventils **5** auf die dazu komplementäre Fläche am Ventilsitz **112** trifft und somit einen mechanischen Anschlag bildet. Vom Hauptventil **5** erstreckt sich benachbart zur Entwässerungsöffnung **116** ein aufwärts gerichteter Steg **55,** in dem ein der Entwässerungsöffnung **116** zugewandtes Dichtungselement **56** eingebettet ist. Bei geschlossenem Hauptventil **5** ist die Entwässerungsöffnung **116** frei, so dass oberhalb des Hauptventils **5** anstehendes Wasser aus dem Hydranten **1** in das umgebende Erdreich abfliessen kann. Der als Auftriebskörper gestaltete Schwimmer **460** befindet sich innerhalb der Haube **461** (s. Figur 2) in unterer, unangehobener Position, da kein Wasser durch den Strömungsspalt **S** gelangt, welches den Schwimmer **460** anheben würde. Dieser Schaltzustand - z.B. als 0-Signal - wird vom Schalter **462** über ein drittes Kabel **463** an die Elektronikeinheit **474** übertragen.

Bei offenem Hauptventil **5** wird die Entwässerungsöffnung **116** vom Dichtungselement **56** verschlossen, um ein Abfliessen von Wasser durch die Entwässerungsöffnung **116** zu verhindern. Zugleich füllt sich der Hydrant **1,** und schliesslich fliesst Wasser durch den Strömungsspalt **S**, worauf der Schwimmer **460** nach oben fährt. Folglich kommt es zum Signalwechsel - nun 0-Signal - und an der Elektronikeinheit **474** wird der Signalunterbruch erkannt, der über die Antenne **48** als Information an den Empfänger, z.B. die Datenzentrale, gelangt. Der Signalunterbruch erfolgt bei offenem Hauptventil **5** zwecks gezielter Wasserentnahme aus dem Hydranten **1** oder bei undichtem, schadhaftem Hauptventil **5** oder bei geschlossenem Hauptventil **5** falls über den Entwässerungsbogen **118** und die Entwässerungsöffnung **116** in den Hydranten **1** Schmutzwasser infolge einer Überschwemmung eindringt.

Das Basisteil **40** der Signaleinheit **4** ist mit mindestens zwei, vorzugsweise vier, Schrauben **19** am oberen Flansch **120** der Steigrohrverlängerung **12** fixiert. Dabei greifen die Schrauben **19** in komplementäre Gewindehülsen **409,** welche durch geometrische Konturierung auszugsgesichert in den jeweiligen Schraubenlöchern **401** eingesetzt sind. Zur Abdichtung wird man zwischen dem oberen Flansch **120** und dem Basisteil **40** eine Dichtung einfügen. Das Aufsatzrohr **10** (s. Figur 1A) ist mit mindestens zwei, vorzugsweise vier, Schrauben **19** auf dem Basisteil **40** befestigt, die in die in den Schraubenlöchern **401** steckenden Gewindehülsen **409** eingreifen.

Das erste Kabel **42** erstreckt sich vom ersten Kupplungsteil **420** abwärts entlang dem Spindelaufsatz **221,** dem Spindellager **23** und der Spindel **22,** um am unteren Ende der Spindelmutter **21** durch den Eintritt **421** sich in das Innere der Ventilstangenverlängerung **20** fortzusetzen. Durch die Ventilstangenverlängerung **20,** die Ventilstange **2** und das Hauptventil **5** gelangt das erste Kabel **42** an die zweite Detektoreinheit **49,** zumeist in Gestalt eines Hydrophons. Die zweite Detektoreinheit **49** sitzt unterhalb des Hauptventils **5,** ist von einem sich vom Hauptventil **5** erstreckenden Schutzkorb **51** umgeben und erfasst den charakteristischen Wasserschall, wie er beim Ausströmen aus einem Leck im Wasserleitungsnetz **13** oder bei der Wasserentnahme über den Hydranten **1** entsteht.

Das von der zweiten Detektoreinheit **49** erfasste Signal gelangt über das erste Kabel **42,** die miteinander verbundenen Kupplungsteile **420,430** und das zweite Kabel **43** an die Elektronikeinheit **474** und schliesslich an die Sendeantenne **48.** Von der Sendeantenne **48** erfolgt die Übertragung auf einen Empfänger, der entweder ein Datenübermittler zwischen Funk- und Festnetz oder die Signaleinheit **4** eines benachbarten Hydranten **1** als Zwischenstation ist.

Alternativ zur zweiten Detektoreinheit **49** in Gestalt eines Hydrophons kann man mit einer Körperschallmessung arbeiten und den dazu nötigen Sensor, z. B. im Basisteil **40** der Signaleinheit **4** oder am oberen Flansch **120** der Steigrohrverlängerung **12** installieren. Ein solcher Sensor nimmt die im Wasserleitungsnetz **13,** z.B. durch eine Leckstelle, auftretenden Schwingungen auf. Wie zuvor beschrieben, gelangt das vom Sensor detektierte Signal über das zweite Kabel **43,** die Elektronikeinheit **474** und Sendeantenne **48** zum Empfänger.

### Figuren 6A bis 6C

Das innerhalb der Ventilstange **2** und der Ventilstangenverlängerung **20** geführte erste Kabel **42** hat an seinem unteren Ende eine spiralförmige Wicklung. Dadurch steht eine ausreichende Reservelänge am ersten Kabel **42** zur Verfügung, wenn die Ventilstangenverlängerung **20** aufgrund maximal konzipierter Einbautiefe des Hydranten **1** am weitesten aus der Ventilstange **2** ausgezogen montiert ist. Die zweite Detektoreinheit **49** ist im Prinzip im Hauptventil **5** angeordnet und ragt nach unten über die Hauptdichtung **50** hinaus. Der die zweite Detektoreinheit **49** umgebende Schutzkorb **51** hat die Funktion, das empfindliche Gerät zu schützen, nämlich vor im Wasser treibenden Partikeln oder bei Wartungsarbeiten am Hydranten **1,** wenn das Hauptventil **5** mit der zweiten Detektoreinheit **49** ausgebaut werden muss.

### Figuren 7A bis 7E

Nachfolgend wird im Wesentlichen nur auf die Modifikationen am Basisteil **40** und dessen Umfeld an der Signaleinheit **4** *erster Variante* eingegangen. Das Basisteil **40** besitzt nun eine polygone Aussenkontur, die sich harmonischer an im Durchmesser verschieden runde Bauteile zahlreicher Hydrantentypen anfügt. Das Basisteil **40** mit dem nach aussen weisenden Schaft **41** und das sich daran anschliessende Gehäuse **47** sind als integrales Bauteil - vorzugsweise im Metallguss hergestellt - ausgebildet. Das Gehäuse **47** hat einen Hohlraum **470,** in dem der Batteriehalter **476'** mit seinem Aufnahmefach **477,** der darin einsetzbaren Batterie **476** und der Fuss der Antenne **48** aufgenommen sind. Die Antenne **48** ist durch die Öffnung **478** in das Gehäuse **47** eingesetzt, wobei sich in der Öffnung **478** das Schutzrohr **480,** z.B. mittels Gewindeeingriff, fixieren lässt. Der Hohlraum **470** erstreckt sich axial durch das Gehäuse **47,** mündet nach oben in die Öffnung **478** und seitlich hin zum Schaft **41.**

Der Batteriehalter **476'** hat das Aufnahmefach **477,** von dem sich diametral und in Axialrichtung des Gehäuses **47** zwei Stege **475** armartig erstrecken, an deren Enden eine Fixierkontur **475'** vorgesehen ist. Axial beidseits ist das Gehäuse **47** mit je einem Deckel **472** verschliessbar. Ein zentrisch im jeweiligen Deckel **472** eingesetztes Fixierelement **479** greift in die zugewandte Fixierkontur **475'** am Batteriehalter **476'** ein. Die Deckel **472** sind jeweils mit einer Ringdichtung versehen, welche im montierten Zustand den Deckel **472** gegenüber dem Gehäuse **47** abdichtet. Die Elektronikeinheit **474** ist im Schaft **41** untergebracht. Wiederum sind die Antenne **48,** die Batterie **476,** der pfostenförmige Schalter **462** und das Kontaktelement **431** am Ende des zweiten Kabels **43** elektrisch an der Elektronikeinheit **474** angeschlossen. Vom Schalter **462** führt ein drittes Kabel **463** an die Elektronikeinheit **474.**

### Figuren 8A bis 9C

Bei dieser Figurenfolge ist die Signaleinheit **4** *zweiter Variante* an einem Unterflurhydranten **1** dargestellt, kann jedoch auch für den Aufbau eines Überflurhydranten **1 -** mit oder ohne Steigrohrverlängerung **12** - eingesetzt werden. Eine erste wesentliche Besonderheit ist, dass nun am Basisteil **40** keine Schraubenlöcher **401** mit darin eingesetzten Gewindehülsen **409** vorhanden sind, sondern das Basisteil **40** zwischen dem oberen Flansch **110** des Steigrohrs **11** und dem Deckel **27** nach aussen dicht verspannt ist. Die Verspannung erfolgt mittels Schrauben **19** und Muttern **19',** die sich am oberen Flansch **110** bzw. am Deckel **27** abstützen, ohne das Basisteil **40** zu durchdringen. Ist der Unterflurhydrant **1** mit einer Steigrohrverlängerung **12** versehen, sitzt das Basisteil **40** auf deren oberen Flansch **120** auf, und die Schrauben **19** würden sich daran abstützen. Unverändert ragt axial aus dem Deckel **27** der Mitnehmer **222** heraus und geht vom Deckel 27 der Anschluss **24** ab.

Beim Aufbau eines Überflurhydranten **1** sitzt das Basisteil **40** auf dem oberen Flansch **110** des Steigrohrs **11** bzw. auf dem oberen Flansch **120** der Steigrohrverlängerung **12** auf. Oben ist das Basisteil **40** dann vom aufsitzenden unteren Flansch des Aufsatzrohrs **10** eingespannt. Die Verschraubung **19,19'** erstreckt sich somit zwischen dem oberen Flansch **110** des Steigrohrs **11** bzw. dem oberen Flansch **120** der Steigrohrverlängerung **12** und dem unteren Flansch am Aufsatzrohr **10.**

Eine nächste essentielle Besonderheit bei der *zweiten Variante* der Signaleinheit **4** ist, dass - wie bereits zuvor, Basisteil **40** und Schaft **41** ein Teil bilden - nun jedoch Basisteil **40,** Schaft **41** und Gehäuse **47** einen integralen Körper darstellen. Das Gehäuse **47** beherbergt innerlich ein sich im Prinzip horizontal erstreckendes Aufnahmefach **477** und ist mit einer Anschlussbuchse **481** versehen. Diese Anschlussbuchse **481** ist zum Andocken eines zur Antenne **48** führenden Kabels nutzbar. Die Antenne **48** kann je nach den örtlichen Bedingungen, der Beschaffenheit als Unterflur- oder Überflurhydrant **1** und der Bauart direkt auf dem Gehäuse **47** oder vom Hydranten **1** entfernt installiert sein.

Axial vom Spindellager **23** erstreckt sich der Spindelaufsatz **221,** welcher mit einem Verlängerungsstück **26** versehen ist, das mit dem Mitnehmer **222** Formschluss hat. Aus dem Steigrohr **11** aufsteigend verläuft bis in den Axialdurchgang **400** das erste Kabel **42,** welches zuoberst das erste Kupplungsteil **420** aufweist, das zur Verbindung mit dem zweiten Kupplungsteil **430** bestimmt ist. Auf dem in den Axialdurchgang **400** hineinragenden Sockel **45** ist wiederum die erste Detektoreinheit **46** positioniert, welche die mit der Schraube **469** befestigte Haube **461,** den darunter befindlichen Schwimmer **460** und den zuoberst mit der Mutter **466** gesicherten Schalter **462** umfasst.

Das Gehäuse **47** hat innerlich den Hohlraum **470,** der sich bis in den Schaft **41** erstreckt und das Aufnahmefach **477** beherbergt. Im Hohlraum **470** ist die Elektronikeinheit **474** angeordnet, von der das zweite Kabel **43** an das zweite Kupplungsteil **430** führt und sich das dritte Kabel **463** an den Schalter **462** erstreckt. Andererseits verlaufen ein viertes Kabel **484** von der Anschlussbuchse **481** und eine elektrische Verbindung von der Batterie **476** an die Elektronikeinheit **474.** Front- und rückseitig ist das Gehäuse **47** jeweils mit einem mit Fixierelementen **479** montierbaren Deckel **472** versehen. Im frontseitigen Deckel **472** ist die von aussen zugängliche Anschlussbuchse **481** eingebaut. Der rückseitige Deckel **472** hat die zentrische Öffnung **472',** um hierdurch die im Batteriehalter **476'** steckende Batterie **476** in das Aufnahmefach **477** einzuschieben. Das nach aussen weisende Ende des Batteriehalters **476'** dichtet im eingeschobenen Zustand in der Öffnung **472'** ab und ist mit einem Sicherungsorgan **471** arretiert. Vorteilhaft ist das Basisteil **40** mit Schaft **41** und Gehäuse **47** als einteiliges Gussteil hergestellt. Für die Errichtung eines Unterflurhydranten **1** kann man vorsehen, dass Basisteil **40** mit Schaft **41,** Gehäuse **47** und Deckel **27** ein integrales Teil bilden.

## Patentansprüche

1. Überwachungseinrichtung für ein Wasserleitungsnetz **(13),** die an einem Hydranten **(1)** installiert ist, wobei:
a) der Hydrant **(1)** aufweist:
aa) ein zum Anschluss an das Wasserleitungsnetz **(13)** bestimmtes Steigrohr **(11),** auf dem sich eine optionale Steigrohrverlängerung **(12)** montieren lässt;
ab) ein Hauptventil **(5)** zum Zusammenwirken mit einem Ventilsitz **(112);**
ac) eine mit dem Hauptventil **(5)** verbundene Ventilstange **(2),** an der sich eine optionale Ventilstangenverlängerung **(20)** montieren lässt;
ad) eine mit der Ventilstange **(2)** bzw. der Ventilstangenverlängerung **(20)** verbundene Spindelmutter **(21),** in welche eine Spindel **(22)** eingreift; und
ae) ein Spindellager **(23),** an dem sich die Spindel **(22)** axial abstützt und das im Steigrohr **(11)** bzw. in der Steigrohrverlängerung **(12)** arretiert ist; und
b) die Überwachungseinrichtung eine Signaleinheit **(4)** hat, welche aufweist:
ba) zumindest eine Detektoreinheit **(46,49)** zur Zustandserfassung im Wasserleitungsnetz **(13)** und/oder am Hydranten **(1);**
bb) eine zur Stromversorgung der Signaleinheit **(4)** dienende Batterie **(476);** und
bc) eine Sendeantenne **(48)** zur Übermittlung der von der zumindest einen Detektoreinheit **(46,49)** erfassten Signale, **dadurch gekennzeichnet, dass**
c) die Signaleinheit **(4)** ein auf dem Steigrohr **(11)** bzw. auf der Steigrohrverlängerung **(12)** montiertes Basisteil **(40)** umfasst, welches einen Axialdurchgang **(400)** und ein von aussen zugängliches Aufnahmefach **(477)** zur Unterbringung der Batterie (**476**) hat.

2. Überwachungseinrichtung nach Anspruch 1, **dadurch gekennzeichnet, dass**
a) das Basisteil **(40)** zur Durchleitung der von der zumindest einen Detektoreinheit **(46,49)** erfassten Signale an die Sendeantenne **(48)** dient;
b) zur Bildung eines Hydranten **(1)** in Gestalt eines Überflurhydranten auf dem Basisteil **(40)** ein Aufsatzrohr **(10)** montierbar ist;
c) zur alternativen Bildung eines Hydranten **(1)** in Gestalt eines Unterflurhydranten auf dem Basisteil **(40)** ein Deckel **(27)** montierbar ist oder das Basisteil **(40)** einen fest zugehörigen Deckel **(27)** besitzt;
d) in den Axialdurchgang **(400)** des Basisteils **(40)** ein mit der Spindel **(22)** verbundener Spindelaufsatz **(221)** oder ein auf dem Spindelaufsatz **(221)** montiertes Verlängerungsstück **(26)** hineinragt; und
e) der Axialdurchgang **(400)** dem Wasserdurchlass hin zum Anschluss **(103)** eines Aufsatzrohrs **(10)** oder hin zum Anschluss **(24)** an einem Deckel (**27**) dient oder die Wasserführung am Basisteil **(40)** vorbei hin zum Anschluss **(24)** ausgebildet ist.

3. Überwachungseinrichtung nach einem der Ansprüche 1 und 2, **dadurch gekennzeichnet, dass**
a) eine erste Detektoreinheit **(46)** am Basisteil **(40)** angeordnet ist; und
b) die Sendeantenne **(48)** aussen am Basisteil **(40)** oder entfernt vom Hydranten **(1)** installiert ist.

4. Überwachungseinrichtung nach einem der Ansprüche 1 bis 3, **dadurch gekennzeichnet, dass** das Basisteil **(40)** einen nach aussen weisenden Schaft **(41)** besitzt, wobei:
a) der Schaft **(41)** eine nach aussen mündende Öffnung hat und an den Schaft **(41)** ein Gehäuse **(47)** ansetzt, welches zur Aufnahme der Sendeantenne **(48)** nutzbar ist und zur Bildung des Aufnahmefachs **(477)** mit der darin eingesetzten Batterie **(476)** dient; oder
b) sich einteilig an den Schaft **(41)** ein Gehäuse **(47)** anschliesst und Schaft **(41)** und Gehäuse **(47)** einen inneren Hohlraum **(470)** haben, der anteilig das Aufnahmefach **(477)** für die darin einsetzbare Batterie **(476)** darstellt, und das Gehäuse **(47)** zur Aufnahme der Sendeantenne **(48)** nutzbar ist.

5. Überwachungseinrichtung nach einem der Ansprüche 1 bis 4, **dadurch gekennzeichnet, dass**
a) das Basisteil **(40)** einen sich in dessen Axialdurchgang **(400)** erstreckenden Sockel **(45)** hat, an dem die erste Detektoreinheit **(46)** installiert ist; und
b) die erste Detektoreinheit **(46)** einen beweglichen Schwimmer **(460)** hat, welcher zur Signalisation von im Steigrohr **(11)** bzw. auch in der optional vorhandenen Steigrohrverlängerung **(12)** befindlichen Wassers dient.

6. Überwachungseinrichtung nach einem der Ansprüche 1 bis 5, **dadurch gekennzeichnet, dass** am Basisteil **(40)** eine Zusatzsensorik **(44)** angeordnet ist zur Schallmessung zwecks Leckerkennung und/oder zur Erfassung des mengenmässigen Wasserbezugs über den Hydranten (1) und/oder zur Erfassung von Wasserkenngrössen, wie Druck, pH-Wert, Härte, Trübung und Temperatur.

7. Überwachungseinrichtung nach einem der Ansprüche 1 bis 6, **dadurch gekennzeichnet, dass** vor dem Hauptventil **(5)**, dem Wasserleitungsnetz **(13)** zugewandt, eine zweite Detektoreinheit **(49)** zur Erkennung eines Lecks im Wasserleitungsnetz **(13)** mittels Schallmessung angeordnet ist.

8. Überwachungseinrichtung nach einem der Ansprüche 1 bis 7, **dadurch gekennzeichnet, dass** die zweite Detektoreinheit **(49)** die Gestalt eines Hydrophons hat.

9. Überwachungseinrichtung nach einem der Ansprüche 1 bis 8, **dadurch gekennzeichnet, dass** zwischen der zweiten Detektoreinheit **(49)** und der Sendeantenne **(48)** eine elektrische Verbindung **(42,43,474)** besteht, wobei die elektrische Verbindung **(42,43,474)** umfasst:
a) ein an die zweite Detektoreinheit **(49)** angeschlossenes erstes Kabel **(42),** das im Hydranten **(1)** aufwärts geführt ist;
b) ein sich vom ersten Kabel **(42)** fortsetzendes zweites Kabel **(43),** welches an eine Elektronikeinheit **(474)** führt; und
c) einen Anschluss zwischen der Elektronikeinheit **(474)** und der Sendeantenne **(48).**

10. Überwachungseinrichtung nach Anspruch 9, **dadurch gekennzeichnet, dass**
a) ein oberes Ende des ersten Kabels **(42)** mit einem ersten Kupplungsteil **(420)** versehen ist;
b) ein Ende des zweiten Kabels **(43)** mit einem zweiten Kupplungsteil **(430)** versehen ist, das am Basisteil **(40)** angeordnet ist;
c) die beiden Kupplungsteile **(420,430)** zur Verbindung miteinander bestimmt sind;
d) das zweite Kabel **(43)** sich aus dem Basisteil **(40)** durch dessen Schaft **(41)** in das Gehäuse **(47)** erstreckt, in dem die Elektronikeinheit **(474)** untergebracht ist; und
e) ein anderes Ende des zweiten Kabels **(43)** mit einem Kontaktelement **(431)** versehen ist, das an der Elektronikeinheit **(474)** angeschlossen ist.

11. Überwachungseinrichtung nach einem der Ansprüche 1 bis 10, **dadurch gekennzeichnet, dass**
a) das Basisteil **(40)** ein Raster von Schraubenlöchern **(401)** hat;
b) die Schraubenlöcher **(401)** zur Verschraubung einerseits mit dem Steigrohr **(11)** bzw. der Steigrohrverlängerung (**12**) bestimmt sind;
c) die Schraubenlöcher **(401)** zur Verschraubung andererseits mit einem Aufsatzrohr **(10)** zur Bildung eines Überflurhydranten **(1)** bzw. mit einem Deckel **(27)** zur Bildung eines Unterflurhydranten (**1**) dienen;
d) das Raster von Schraubenlöchern **(401)** die Befestigung des Basisteils **(40)** auf dem Steigrohr **(11)** bzw. der Steigrohrverlängerung **(12)** in wählbarer Drehstellung erlaubt; und
e) das Raster von Schraubenlöchern **(401)** die Befestigung des Aufsatzrohrs **(10)** bzw. des Deckels **(27)** auf dem Basisteil **(40)** in wählbarer Drehstellung erlaubt.

12. Überwachungseinrichtung nach einem der Ansprüche 1 bis 10, **dadurch gekennzeichnet, dass**
a) beim Aufbau eines Überflurhydranten **(1)** das Basisteil **(40)** zwischen dem oberen Flansch **(110)** des Steigrohrs **(11)** bzw. auf dem oberen Flansch **(120)** der Steigrohrverlängerung **(12)** und dem unteren Flansch des Aufsatzrohrs **(10)** eingespannt ist und sich dabei eine Verschraubung **(19,19')** zwischen dem oberen Flansch **(110)** des Steigrohrs **(11)** bzw. dem oberen Flansch **(120)** der Steigrohrverlängerung **(12)** und dem unteren Flansch am Aufsatzrohr **(10)** erstreckt, ohne das Basisteil **(40)** zu durchdringen; und
b) beim Aufbau eines Unterflurhydranten **(1)** das Basisteil **(40)** zwischen dem oberen Flansch **(110)** des Steigrohrs **(11)** und dem Deckel **(27)** nach aussen dicht verspannt ist, wobei die Verspannung mittels Schrauben **(19)** und Muttern **(19')** erfolgt, die sich am oberen Flansch **(110)** bzw. am Deckel **(27)** abstützen, ohne das Basisteil **(40)** zu durchdringen; wobei
c) an einem Unterflurhydranten (1) mit einer Steigrohrverlängerung **(12)** das Basisteil **(40)** auf deren oberen Flansch **(120)** aufsitzt und die Verschraubung **(19,19')** sich daran abstützt.

13. Überwachungseinrichtung nach einem der Ansprüche 1 bis 12, **dadurch gekennzeichnet, dass** das Aufnahmefach **(477)** zur Unterbringung der Batterie **(476)** für die Energieversorgung der Überwachungseinrichtung:
a) entweder direkt vom Hohlraum **(470)** des Gehäuses **(47)** gebildet ist; oder
b) in einem als separates Bauteil beschaffenem Batteriehalter **(476')** liegt, der zum Einsetzen in den Hohlraum **(470)** des Gehäuses **(47)** bestimmt ist;
c) ein aus dem Hohlraum **(470)** mündender Zugang für das Einsetzen der Batterie **(476)** bzw. des Batteriehalters **(476')** mit der darin positionierten Batterie **(476)** von einem lösbarem Deckel **(472)** verschlossen ist; und
d) am Gehäuse **(47)** eine Anschlussbuchse **(481)** zum Andocken einer Verbindung zur Antenne **(48)** vorgesehen sein kann.

14. Überwachungseinrichtung nach Anspruch 13, **dadurch gekennzeichnet, dass**
a) der Batteriehalter **(476')** mit seinem Aufnahmefach **(477)** zwei sich diametral und in Axialrichtung des Gehäuses **(47)** armartig erstreckende Stege **(475)** aufweist, an deren Enden eine Fixierkontur **(475')** vorgesehen ist; und
b) das Gehäuse **(47)** axial beidseits mit je einem Deckel **(472)** verschliessbar ist, in dem ein Fixierelement **(479)** steckt, welches in die jeweils zugewandte Fixierkontur **(475')** am Batteriehalter **(476)** eingreift.

15. Überwachungseinrichtung nach einem der Ansprüche **1** bis **14**, **dadurch gekennzeichnet, dass** die Sendeantenne **(48)** innerhalb eines Verbundes von Hydranten **(1),** die jeweils mit der Überwachungseinrichtung ausgestattet sind, auch zum Empfang von Signalen einer benachbart installierten Überwachungseinrichtung und Weiterleitung dieser Signale an eine nächste Überwachungseinrichtung oder eine Datenzentrale nutzbar ist.

## Claims

1. Monitoring device for a water supply network **(13),** which is installed on a hydrant **(1)**
a) the hydrant **(1)** having:
aa) a riser pipe **(11)** which is intended to be connected to the water supply network **(13)** and on which an optional riser pipe extension **(12)** can be mounted;
ab) a main valve **(5)** to interact with a valve seat **(112);**
ac) a valve rod **(2)** which is connected to the main valve **(5)** and on which an optional valve rod extension **(20)** can be mounted;
ad) a spindle nut **(21)** which is connected to the valve rod (2) or the valve rod extension **(20)** and in which a spindle **(22)** engages; and
ae) a spindle bearing **(23),** on which the spindle **(22)** is supported axially and which can be locked in the riser pipe **(11)** or in the riser pipe extension **(12);** and
b) the monitoring device having a signal unit **(4),** which has:
ba) at least one detector unit **(46,49)** to detect the status in the water supply network **(13)** and/or on the hydrant **(1);**
bb) a battery **(476)** serving to supply power to the signal unit **(4);** and
bc) a transmitting antenna **(48)** for transmitting the signals detected by the at least one detector unit **(46,49), characterized in that**
c) the signal unit **(4)** comprises a base part **(40)** which is mounted on the riser pipe **(11)** or on the riser pipe extension **(12)** and which has an axial passage **(400)** and a holding compartment **(477)** accessible from outside to accommodate the battery **(476).**

2. Monitoring device according to Claim 1, **characterized in that**
a) the base part **(40)** is used to conduct the signals detected by the at least one detector unit **(46,49)** to the transmitting antenna **(48);**
b) in order to form a hydrant **(1)** in the configuration of an overground hydrant, a top pipe **(10)** can be mounted on the base part **(40);**
c) in order alternatively to form a hydrant **(1)** in the configuration of an underground hydrant, a cover **(27)** can be mounted on the base part **(40)** or the base part **(40)** has a fixedly associated cover **(27);**
d) a spindle attachment **(221)** connected to the spindle **(22)** or an extension piece **(26)** mounted on the spindle attachment **(221)** projects into the axial passage **(400)** of the base part **(40);** and
e) the axial passage **(400)** is used for the passage of water to the connection **(103)** of a top pipe **(10)** or to the connection **(24)** on a cover **(27)** or is designed to carry water past the base part **(40)** to the connection **(24).**

3. Monitoring device according to either of Claims 1 and 2, **characterized in that**
a) a first detector unit **(46)** is arranged on the base part **(40);** and
b) the transmitting antenna **(48)** is installed on the outside of the base part **(40)** or at a distance from the hydrant **(1).**

4. Monitoring device according to one of Claims 1 to 3, **characterized in that** the base part **(40)** has a shaft **(41)** pointing outwards, wherein:
a) the shaft **(41)** has an opening pointing outwards and a housing **(47)** is seated on the shaft **(41),** which housing can be used to accommodate the transmitting antenna **(48)** and is used to form the holding compartment **(477)** with the battery **(476)** inserted therein; or
b) a housing **(47)** adjoins the shaft **(41)** in one piece, and shaft **(41)** and housing **(47)** have an internal cavity **(470),** which partly represents the holding compartment **(477)** for the battery **(476)** that can be inserted therein, and the housing **(47)** can be used to accommodate the transmitting antenna **(48).**

5. Monitoring device according to one of Claims 1 to 4, **characterized in that**
a) the base part **(40)** has a plinth **(45)** extending in the axial passage **(400)** thereof, on which plinth the first detector unit **(46)** is installed; and
b) the first detector unit **(46)** has a movable float **(460),** which is used to signal that there is water in the riser pipe **(11)** or also in the optionally present riser pipe extension **(12).**

6. Monitoring device according to one of Claims 1 to 5, **characterized in that** additional sensors **(44)** are arranged on the base part **(40)** for sound measurement for the purpose of leak detection and/or for detecting the volumetric water usage via the hydrant (1) and/or for detecting water characteristic variables, such as pressure, pH-value, hardness, turbidity and temperature.

7. Monitoring device according to one of Claims 1 to 6, **characterized in that** before the main valve **(5),** facing the water supply network **(13),** there is arranged a second detector unit **(49)** for detecting a leak in the water supply network **(13)** by means of sound measurement.

8. Monitoring device according to one of Claims 1 to 7, **characterized in that** the second detector unit **(49)** has the configuration of a hydrophone.

9. Monitoring device according to one of Claims 1 to 8, **characterized in that** between the second detector unit **(49)** and the transmitting antenna **(48)** there is an electric connection **(42,43,474),** the electric connection **(42,43,474)** comprising:
a) a first cable **(42),** which is connected to the second detector unit **(49)** and which is led upwards in the hydrant **(1);**
b) a second cable **(43),** which continues on from the first cable **(42)** and which leads to an electronic unit **(474);** and
c) a connection between the electronic unit **(474)** and the transmitting antenna **(48).**

10. Monitoring device according to Claim 9, **characterized in that**
a) an upper end of the first cable **(42)** is provided with a first coupling part **(420);**
b) one end of the second cable **(43)** is provided with a second coupling part **(430),** which is arranged on the base part **(40);**
c) the two coupling parts **(420,430)** are intended to be connected to each other;
d) the second cable **(43)** extends out of the base part **(40),** through the shaft **(41)** of the latter, into the housing **(47)** in which the electronic unit **(474)** is accommodated; and
e) another end of the second cable **(43)** is provided with a contact element **(431),** which is connected to the electronic unit **(474).**

11. Monitoring device according to one of Claims 1 to 10, **characterized in that**
a) the base part **(40)** has a matrix of screw holes **(401);**
b) the screw holes **(401)** are intended firstly for the screw fixing to the riser pipe **(11)** or the riser pipe extension **(12);**
c) the screw holes **(401)** are used secondly for the screw fixing to a top pipe **(10)** to form an overground hydrant **(1)** or to a cover **(27)** to form an underground hydrant **(1);**
d) the matrix of screw holes **(401)** allows the fixing of the base part **(40)** to the riser pipe **(11)** or the riser pipe extension **(12)** in any desired rotational position; and
e) the matrix of screw holes **(401)** allows the fixing of the top pipe **(10)** or the cover **(27)** to the base part **(40)** in any desired rotational position.

12. Monitoring device according to one of Claims 1 to 10, **characterized in that**
a) when building up an overground hydrant (1), the base part **(40)** is clamped in between the upper flange **(110)** of the riser pipe **(11)** or on the upper flange **(120)** of the riser pipe extension **(12)** and the lower flange of the top pipe **(10),** and a screw fixing **(19,19')** extends between the upper flange **(110)** of the riser pipe **(11)** or the upper flange **(120)** of the riser pipe extension **(12)** and the lower flange on the top pipe **(10),** without passing through the base part **(40);** and
b) when building up an underground hydrant **(1),** the base part **(40)** is clamped tightly with respect to the outside between the upper flange **(110)** of the riser pipe **(11)** and the cover **(27),** the clamping being carried out by means of bolts **(19)** and nuts **(19'),** which are supported on the upper flange **(110)** or on the cover **(27),** without passing through the base part **(40);**
c) on an underground hydrant **(1)** with a riser pipe extension **(12),** the base part **(40)** being seated on the upper flange **(120)** thereof and the screw fixing **(19,19')** being supported thereon.

13. Monitoring device according to one of Claims 1 to 12, **characterized in that** the holding compartment **(477)** for accommodating the battery **(476)** for the power supply of the monitoring device:
a) is either formed directly by the cavity **(470)** in the housing **(47);** or
b) is located in a battery holder **(476')** which is procured as a separate component and which is intended to be inserted into the cavity **(470)** in the housing **(47);**
c) an access opening out of the cavity **(470)** for the insertion of the battery **(476)** or the battery holder **(476')** with the battery **(476)** positioned therein is closed by a detachable cover **(472);** and
d) a connecting bush **(481)** for the docking of a connection to the antenna **(48)** can be provided on the housing **(47).**

14. Monitoring device according to Claim 13, **characterized in that**
a) the battery holder **(476')** with its holding compartment **(477)** has two webs **(475)** extending in the manner of arms diametrically and in the axial direction of the housing **(47),** on the ends of which a fixing contour **(475')** is provided; and
b) the housing **(47)** can be closed axially on both sides with a cover **(472)** in each case, in which there is inserted a fixing element **(479)** which engages in the respectively facing fixing contour **(475')** on the battery holder **(476).**

15. Monitoring device according to one of Claims 1 to 14, **characterized in that** the transmitting antenna **(48)** can be used within a cluster of hydrants **(1)** which are each equipped with the monitoring device, also to receive signals from a monitoring device installed adjacently and to pass these signals on to a next monitoring device or a data centre.

## Revendications

1. Dispositif de surveillance pour un réseau d'alimentation en eau **(13)** qui est installé sur une prise d'eau **(1),** avec lequel:
a) la prise d'eau **(1)** présente:
aa) une colonne montante **(11)** conçue pour être raccordée au réseau d'alimentation en eau **(13)** et sur laquelle peut être monté un prolongateur de colonne montante **(12)** optionnel;
ab) une vanne principale **(5)** destinée à coopérer avec un siège de vanne **(112);**
ac) une tige de vanne **(2)** reliée avec la vanne principale **(5)** et sur laquelle peut être monté un prolongateur de tige de vanne **(20)** optionnel;
ad) un écrou de broche **(21)** relié avec la tige de vanne **(2)** ou le prolongateur de tige de vanne **(20),** dans lequel une broche **(22)** vient en prise; et
ae) un palier de broche **(23)** sur lequel la broche **(22)** s'appuie dans le sens axial et qui est bloqué dans la colonne montante **(11)** ou dans le prolongateur de colonne montante **(12);** et
b) le dispositif de surveillance possède une unité de signalisation **(4)** qui présente:
ba) au moins une unité de détection **(46,49)** destinée à une détection d'état dans le réseau d'alimentation en eau **(13)** et/ou sur la prise d'eau **(1);**
bb) une batterie **(476)** servant à l'alimentation électrique de l'unité de signalisation **(4);** et
bc) une antenne d'émission **(48)** destinée à la transmission des signaux détectés par ladite unité de détection **(46,49),** **caractérisé en ce que**
c) l'unité de signalisation **(4)** comprend une partie de base **(40)** montée sur la colonne montante **(11)** ou sur le prolongateur de colonne montante **(12),** laquelle possède une traversée axiale **(400)** et un compartiment d'accueil **(477)** accessible de l'extérieur destiné à y loger la batterie **(476).**

2. Dispositif de surveillance selon la revendication 1, **caractérisé en ce que**
a) la partie de base **(40)** sert au transfert à l'antenne d'émission **(48)** des signaux détectés par ladite unité de détection **(46,49);**
b) un tube rapporté **(10)** peut être monté sur la partie de base **(40)** en vue de former une prise d'eau **(1)** sous la forme d'une prise d'eau surélevée;
c) un couvercle **(27)** peut être monté sur la partie de base **(40)** ou la partie de base **(40)** possède un couvercle **(27)** associé fixé à demeure en vue de former de manière alternative d'une prise d'eau **(1)** sous la forme d'une prise d'eau souterraine;
d) un chapeau de broche **(221)** relié avec la broche **(22)** ou un prolongateur **(26)** monté sur le chapeau de broche **(221)** fait saillie dans la traversée axiale **(400)** de la partie de base **(40);** et
e) la traversée axiale **(400)** sert au passage de l'eau en direction du raccord **(103)** d'un tube rapporté **(10)** ou en direction du raccord **(24)** sur un couvercle **(27),** ou le guidage de l'eau est réalisé en passant par la partie de base **(40)** en direction du raccord **(24).**

3. Dispositif de surveillance selon l'une des revendications 1 et 2, **caractérisé en ce que**
a) une première unité de détection **(46)** est disposée sur la partie de base **(40);** et
b) l'antenne d'émission **(48)** est installée à l'extérieur sur la partie de base **(40)** ou à distance de la prise d'eau **(1).**

4. Dispositif de surveillance selon l'une des revendications 1 à 3, **caractérisé en ce que** la partie de base **(40)** possède un arbre **(41)** orienté vers l'extérieur, avec lequel:
a) l'arbre **(41)** possède une ouverture qui débouche vers l'extérieur et sur l'arbre **(41)** repose un boîtier **(47)** qui peut être utilisé pour accueillir l'antenne d'émission **(48)** et sert à former le compartiment d'accueil **(477)** dans lequel est insérée la batterie **(476);** ou
b) un boîtier **(47)** se raccorde d'une seule pièce à l'arbre **(41)** et l'arbre **(41)** et le boîtier **(47)** possèdent un espace creux intérieur **(470)** qui représente proportionnellement le compartiment d'accueil **(477)** pour la batterie **(476)** qui peut y être insérée, et le boîtier **(47)** peut être utilisé pour accueillir l'antenne d'émission **(48).**

5. Dispositif de surveillance selon l'une des revendications 1 à 4, **caractérisé en ce que**
a) la partie de base **(40)** possède un socle **(45)** qui s'étend dans sa traversée axiale **(400),** sur lequel est installée la première unité de détection **(46);** et
b) la première unité de détection **(46)** possède un flotteur mobile **(460)** qui sert à la signalisation de l'eau qui se trouve dans la colonne montante **(11)** ou aussi dans le prolongateur de colonne montante **(12)** optionnel.

6. Dispositif de surveillance selon l'une des revendications 1 à 5, caractérisé en ce qu'un dispositif de détection supplémentaire **(44)** est disposé sur la partie de base **(40),** destiné à la mesure du bruit en vue de l'identification des fuites et/ou destiné à la détection de la fourniture d'eau volumique par le biais de la prise d'eau **(1)** et/ou destiné à la détection de grandeurs caractéristiques de l'eau, comme la pression, la valeur pH, la dureté, la turbidité et la température.

7. Dispositif de surveillance selon l'une des revendications 1 à 6, caractérisé en ce qu'une deuxième unité de détection **(49)** destinée à identifier une fuite dans le réseau d'alimentation en eau **(13)** au moyen de la mesure du bruit est disposée avant la vanne principale **(5),** faisant face au réseau d'alimentation en eau **(13).**

8. Dispositif de surveillance selon l'une des revendications 1 à 7, **caractérisé en ce que** la deuxième unité de détection **(49)** possède la forme d'un hydrophone.

9. Dispositif de surveillance selon l'une des revendications 1 à 8, caractérisé en ce qu'il existe entre la deuxième unité de détection **(49)** et l'antenne d'émission **(48)** une liaison électrique **(42,43,474),** la liaison électrique **(42,43,474)** incluant:
a) un premier câble **(42)** raccordé à la deuxième unité de détection **(49)** et qui remonte dans la prise d'eau **(1);**
b) un deuxième câble **(43)** qui se poursuit depuis le premier câble **(42)** et qui mène à une unité électronique **(474)** et
c) un raccord entre l'unité électronique **(474)** et l'antenne d'émission **(48).**

10. Dispositif de surveillance selon la revendication 9, **caractérisé en ce que**
a) une extrémité supérieure du premier câble **(42)** est munie d'une première partie d'accouplement **(420);**
b) une extrémité du deuxième câble **(43)** est munie d'une deuxième partie d'accouplement **(430)** qui est disposée sur la partie de base **(40);**
c) les deux parties d'accouplement **(420,430)** sont conçues pour être reliées l'une à l'autre;
d) le deuxième câble **(43)** s'étend depuis la partie de base **(40)** à travers son arbre **(41)** dans le boîtier **(47)** dans lequel est logée l'unité électronique **(474);** et
e) une autre extrémité du deuxième câble **(43)** est munie d'un élément de contact **(431)** qui est raccordé à l'unité électronique **(474).**

11. Dispositif de surveillance selon l'une des revendications 1 à 10, **caractérisé en ce que**
a) la partie de base **(40)** possède une grille de trous de vis **(401);**
b) les trous de vis **(401)** sont conçus pour la fixation vissée d'un côté avec la colonne montante **(11)** ou le prolongateur de colonne montante **(12);**
c) les trous de vis **(401)** servent à la fixation vissée de l'autre côté avec un tube rapporté **(10)** en vue de former une prise d'eau surélevée **(1)** ou avec un couvercle **(27)** en vue de former une prise d'eau souterraine **(1);**
d) la grille de trous de vis **(401)** permet la fixation de la partie de base **(40)** sur la colonne montante **(11)** ou le prolongateur de colonne montante **(12)** dans une position de rotation au choix; et
e) la grille de trous de vis **(401)** permet la fixation du tube rapporté **(10)** ou du couvercle **(27)** sur la partie de base **(40)** dans une position de rotation au choix.

12. Dispositif de surveillance selon l'une des revendications 1 à 10, **caractérisé en ce que**
a) lors de la construction d'une prise d'eau surélevée **(1),** la partie de base **(40)** est serrée entre la bride supérieure **(110)** de la colonne montante **(11)** ou sur la bride supérieure **(120)** du prolongateur de colonne montante **(12)** et la bride inférieure du tube rapporté **(10),** et une fixation vissée **(19,19')** s'étend ici entre la bride supérieure **(110)** de la colonne montante **(11)** ou la bride supérieure **(120)** du prolongateur de colonne montante **(12)** et la bride inférieure sur le tube rapporté **(10)** sans traverser la partie de base **(40);** et
b) lors de la construction d'une prise d'eau souterraine **(1),** la partie de base **(40)** est serrée de manière étanche vers l'extérieur entre la bride supérieure **(110)** de la colonne montante **(11)** et le couvercle **(27),** le serrage s'effectuant à l'aide de vis **(19)** et d'écrous **(19')** qui s'appuient sur la bride supérieure **(110)** ou sur le couvercle **(27)** sans traverser la partie de base **(40);**
c) sur une prise d'eau souterraine **(1)** munie d'un prolongateur de colonne montante **(12),** la partie de base **(40)** reposant sur sa bride supérieure **(120)** et la fixation vissée **(19,19')** s'appuyant sur celle-ci.

13. Dispositif de surveillance selon l'une des revendications 1 à 12, **caractérisé en ce que** le compartiment d'accueil **(477)** destiné au logement de la batterie **(476)** pour l'alimentation en énergie du dispositif de surveillance:
a) est soit formé directement par l'espace creux **(470)** du boîtier **(47);** ou
b) se trouve dans un porte-batterie **(476')** fourni sous la forme d'un composant séparé, lequel est conçu pour être inséré dans l'espace creux **(470)** du boîtier **(47);**
c) un accès qui débouche depuis l'espace creux **(470)** pour l'insertion de la batterie **(476)** ou du porte-batterie **(476')** avec la batterie **(476)** placée dans celui-ci est fermé par un couvercle amovible **(472);** et
d) une prise de raccordement **(481)** peut être prévue sur le boîtier **(47)** pour l'amarrage d'une liaison avec l'antenne **(48).**

14. Dispositif de surveillance selon la revendication 13, **caractérisé en ce que**
a) le porte-batterie **(476')** avec son compartiment d'accueil **(477)** présente deux éléments de liaison **(475)** qui s'étendent diamétralement et dans le sens axial du boîtier **(47)** à la manière de bras, aux extrémités desquels est prévu un profil de fixation **(475');** et
b) le boîtier **(47)** peut être fermé dans le sens axial des deux côtés à chaque fois avec un couvercle **(472)** dans lequel est inséré un élément de fixation **(479),** lequel vient en prise dans le profil de fixation **(475')** respectivement tourné sur le porte-batterie **(476).**

15. Dispositif de surveillance selon l'une des revendications 1 à 14, **caractérisé en ce que** l'antenne d'émission **(48)** peut être utilisée à l'intérieur d'un ensemble de prises d'eau **(1)** qui sont respectivement équipées du dispositif de surveillance, également pour la réception de signaux d'un dispositif de surveillance installé de manière adjacente et la retransmission de ces signaux à un dispositif de surveillance suivant ou à une centrale de données.
